(19) Europäisches Patentamt
European Patent Office
Office européen des brevets

(11) EP 4 205 876 A1

(12) EUROPEAN PATENT APPLICATION
published in accordance with Art. 153(4) EPC

(43) Date of publication:
05.07.2023 Bulletin 2023/27

(51) International Patent Classification (IPC):
B21D 43/00 (2006.01)   B21D 22/20 (2006.01)
B30B 13/00 (2006.01)

(21) Application number: 21861495.6

(22) Date of filing: 23.08.2021

(52) Cooperative Patent Classification (CPC):
B21D 22/20; B21D 43/00; B30B 13/00; Y02P 10/25

(86) International application number:
PCT/JP2021/030814

(87) International publication number:
WO 2022/045069 (03.03.2022 Gazette 2022/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.08.2020 JP 2020145075

(71) Applicant: NIPPON STEEL CORPORATION
Chiyoda-ku
Tokyo 100-8071 (JP)

(72) Inventors:
• SUZUKI, Toshiya
  Tokyo 100-8071 (JP)
• NOMURA, Naruhiko
  Tokyo 100-8071 (JP)
• HAMADA, Koichi
  Tokyo 100-8071 (JP)
• TATSUMI, Yujiro
  Tokyo 100-8071 (JP)

(74) Representative: J A Kemp LLP
80 Turnmill Street
London EC1M 5QU (GB)

(54) PRESS-MOLDED ARTICLE PRODUCTION METHOD, AND TRAY AND HOT PRESS PRODUCTION LINE USED FOR PRODUCTION OF PRESS-MOLDED ARTICLE

(57) A method of manufacturing a press-formed product includes a heating step, a transportation step, and a pressing step. At the heating step, a sheet-shaped heat storage member 5 and a sheet-shaped workpiece W1 placed above the heat storage member 5 are heated by a heating device 14 while overlapping in the direction normal to the sheet surfaces of the workpiece W1. At a first transportation sub-step, the heat storage member 5 and the workpiece W1 placed above the heat storage member 5 are transported from the heating device 14 to a lifting location while overlapping in the direction normal to the sheet surfaces of the workpiece W1. At a second transportation sub-step, the workpiece W1 placed above the heat storage member 5, when at the lifting location, is lifted upward by a transportation device 46 and transported to a pressing location on a press machine 20. At the pressing step, the workpiece W1 is processed by the press machine 20.

Fig. 1

**Description**

TECHNICAL FIELD

The present invention relates to a method of manufacturing a press-formed product including the steps of heating, transportation and pressing, and a tray and a hot-press manufacturing line used for manufacturing a press-formed product.

BACKGROUND ART

Techniques are in use that heat material to a predetermined temperature and press the material using a press machine. For example, during hot pressing, material, i.e., steel sheet for hot pressing, is heated to the austenite range (i.e., about 900 °C and higher), and is hot press-formed. Thus, quenching is performed together with the forming process, thereby providing a press-formed product with a strength of the order of 1500 MPa or higher, for example. During typical hot stamping, quenching is performed as the sheet is rapidly cooled by contact heat transfer to the die during press-forming. This means that, to sufficiently produce the effects of quenching, the temperature of the material at the beginning of press-forming, which roughly corresponds to the quenching initiation temperature, must not be lower than a certain temperature. In such cases, this certain temperature at the beginning of press-forming is, for example, 700 °C or higher depending on the material.

Japanese Patent Nos. 5910305 and 5910306 each disclose a hot press-forming method involving positioning a plurality of electrically conductive sheet-shaped workpieces so as to overlap each other, attaching electrodes to the workpieces, and passing electricity through the workpieces to heat the sheet-shaped workpieces. The heated sheet-shaped workpieces are positioned at predetermined pressing locations that are different from the location where they receive electricity. Each of the sheet-shaped workpieces at the pressing locations is press-formed. Heating a plurality of sheet-shaped workpieces by simultaneously passing electricity therethrough improves productivity.

In the case of the above-described conventional techniques, heat is diffused out of the workpiece during transportation thereof, causing the temperature of the workpiece to decrease. As a result, when the workpiece is being transported into the die of the press machine, the workpiece may not be maintained at a temperature required from the workpiece, potentially leading to insufficient quenching of the press-formed product.

To solve this problem, Japanese Patent No. 5814669 discloses a transportation device for hot pressing, including a manufacturing line for hot pressing where a panel-shaped object is kept in a heated state and transported from one step to another of the line. The transportation device for hot pressing transports the heated object while the object is covered with a temperature-retaining cover. This maintains the object being transported at a temperature required for quenching.

Japanese Patent No. 4673656 discloses a hot press-forming apparatus including a device for heating a metal sheet that is being processed, including a primary heating means using dielectric heating and electrical heating, and a secondary heating means using radiant heat transmission. The secondary heating means using radiant heat transmission is provided on a device for transportation from the primary heating means to the hot press-forming die. Secondary heating using radiant heat transmission achieves uniform heating of the metal sheet, reducing temperature deviation in the metal sheet.

PRIOR ART DOCUMENTS

PATENT DOCUMENTS

Patent Document 1: Japanese Patent No. 5910305
Patent Document 2: Japanese Patent No. 5910306
Patent Document 3: Japanese Patent No. 5814669
Patent Document 4: Japanese Patent No. 4673656

SUMMARY OF THE INVENTION

PROBLEMS TO BE SOLVED BY THE INVENTION

The inventors noted that, if the material to be hot pressed has a reduced thickness, a temperature drop after heating of the material and during transportation to the press machine may affect the quality of the resulting press-formed product. The inventors investigated how to reduce temperature drop in the material being transported. In the course of the investigation, they found that merely covering the material being transported with a temperature-retaining cover, as with the above-described conventional techniques, may not be enough to sufficiently reduce temperature drop. A secondary heating means may be provided to heat the material during transportation. However, this requires additional equipment including a heat source for the secondary heating means provided on the transportation path. This increases the size of the entire equipment and may, at the same time, lead to increased equipment and/or operation costs.

In view of this, the present application discloses a method of manufacturing a press-formed product, as well as a tray, where, in hot press-forming, temperature drop in material during the transportation period after heating of the material until beginning of press-forming is reduced in a simple manner.

MEANS FOR SOLVING THE PROBLEMS

A method of manufacturing a press-formed product according to an embodiment of the present invention includes a heating step, a first transportation step, a second transportation step, and a pressing step. At the heating step, a sheet-shaped heat storage member and a sheet-shaped workpiece placed above the heat storage member are heated by a heating device while overlapping in a direction normal to a sheet surface of the workpiece. At the first transportation step, the heat storage member and the workpiece placed above the heat storage member are transported from the heating device to a lifting location while overlapping in the direction normal to the sheet surface of the workpiece. At the second transportation step, the workpiece placed above the heat storage member, when at the lifting location, is lifted upward by a transportation device and transported to a pressing location on a press machine. At the pressing step, the workpiece is processed by the press machine.

EFFECTS OF THE INVENTION

According to the present disclosure, in hot press-forming, temperature drop in material during the transportation period after heating of the material until beginning of press-forming is reduced in a simple manner.

BRIEF DESCRIPTION OF THE DRAWINGS

[FIG. 1] FIG. 1 is a schematic view of a hot-press manufacturing line according to an embodiment.
[FIG. 2] FIG. 2 is a top view of a tray according to an embodiment.
[FIG. 3] FIG. 3 is a side view of the tray shown in FIG. 2 as viewed in the direction of arrow F.
[FIG. 4] FIG. 4 is a side view of a tray with struts accommodating a workpiece that is not a flat sheet.
[FIG. 5] FIG. 5 is a top view of a tray with another strut arrangement.
[FIG. 6] FIG. 6 is a side view of the tray shown in FIG. 5 as viewed in the direction of arrow F.
[FIG. 7] FIG. 7 is a side view showing a variation of the struts.
[FIG. 8] FIG. 8 is a side view of an implementation accommodating a workpiece that is a differential-thickness sheet.
[FIG. 9] FIG. 9 is a side view of another implementation accommodating a workpiece that is a differential-thickness sheet.
[FIG. 10] FIG. 10 is a top view of a tray arrangement including shields.
[FIG. 11] FIG. 11 is a side view of the tray shown in FIG. 10 as viewed in the direction of arrow F.
[FIG. 12] FIG. 12 is a side view of a variation of the tray of the embodiments.
[FIG. 13] FIG. 13 is a side view of a variation of the tray of the embodiments.
[FIG. 14] FIG. 14 is a side view of a variation of the tray of the embodiments.
[FIG. 15] FIG. 15 is a side view showing a variation of the heat storage member of the embodiments.
[FIG. 16] FIG. 16 is a side view showing a variation of the heat storage member of the embodiments.
[FIG. 17] FIG. 17 shows a variation of the hot-press manufacturing line of the embodiments.
[FIG. 18A] FIG. 18A shows a construction of the transportation device shown in FIG. 17.
[FIG. 18B] FIG. 18B shows the transportation device shown in FIG. 18A with its second arms opened.
[FIG. 19] FIG. 19 indicates locations at which temperature is measured in the examples.
[FIG. 20] FIG. 20 is a graph of measurements of average temperature drop rate.
[FIG. 21] FIG. 21 is a graph indicating the range from which the average temperature drop rates were derived.

EMBODIMENTS FOR CARRYING OUT THE INVENTION

In hot press-forming, the temperature at the beginning of press-forming depends on the temperature to which material is heated and on the amount of temperature decrease after heating of the material in the period of time for which the material is transported to the die for press-forming. The temperature to which material is heated depends on metallurgical conditions. The period of time of transportation to the die after heating depends on the construction and/or specifications of the equipment. The amount of temperature decrease during this transportation depends on the heat capacity of the material. For example, in the case of a steel sheet, heat escapes mainly through heat transfer and heat radiation (or simply radiation) from the upper and lower surfaces to the atmosphere. The inventors noticed that the amount of temperature decrease during transportation significantly depends on the sheet thickness of the material. More specifically, as discussed above, as the sheet thickness of material decreases, the amount of temperature decrease increases even for the same transportation time, potentially making it difficult to provide a forming initiation temperature required for quenching. As a result, there may be cases where a part does not provide a strength required for press-forming.

The inventors did research to find a way to reduce temperature drop during transportation without an additional heat source. When a sheet-shaped material (i.e., workpiece) has been heated by a heating device, the workpiece is transported on a transportation path, such as a set of rollers, from the transportation device to a location at which the workpiece is lifted by a transportation device. The workpiece is lifted by the transportation device and lowered onto a pressing location in the press machine. The inventors closely looked at the state in which the workpiece is until being moved out of the heating device and lifted by the transportation device.

After extended research, the inventors arrived at positioning a sheet-shaped workpiece and a sheet-shaped heat storage member so that they overlap in the top-bottom direction, heating them in a heating device and, after heating, transporting them from the heating device while they remain overlapping in the top-bottom direction. This allows a workpiece and a heat storage member to receive radiant heat from each other during transportation after heating to provide supplemental amounts of heat to each other. In addition to the workpiece receiving supplemental amounts of heat via radiant heat from the heat storage member to reduce temperature drop during transportation, the heat storage member also receives radiant heat from the workpiece to receive supplemental amounts of heat to reduce temperature drop during transportation. This enables efficiently reducing temperature drop in the workpiece by virtue of supplemental radial heat from the heat storage member to the workpiece. Further, in addition to radiant heat, heat transfer also moves some amounts of heat from the workpiece and heat storage member to the ambient air. For example, if a workpiece and a heat storage member are positioned to overlap in the direction perpendicular to the sheet surface of the workpiece while being in contact with each other, the contact portions are not in contact with air, which reduces movement of amounts of heat through heat transfer from the workpiece and heat storage member to the air. Further, if a workpiece and a heat storage member are positioned to overlap in the direction perpendicular to the sheet surface of the workpiece with some distance created between them, air warmed by heat transfer from the workpiece and heat storage member stays in the space between the heated workpiece and heat storage member. The presence of warmed air staying between the workpiece and heat storage member reduces the temperature differences between the workpiece, on the one hand, and the air between the workpiece and heat storage member, on the other, which reduces amounts of heat moved through heat transfer from the workpiece to the air, thus producing the temperature-retaining effect. This reduces temperature drop in the workpiece during transportation. The embodiments described below are based on these findings.

A method of manufacturing a press-formed product according to an embodiment of the present invention includes a heating step, a first transportation step, a second transportation step, and a pressing step. At the heating step, a sheet-shaped heat storage member and a sheet-shaped workpiece placed above the heat storage member are heated by a heating device while overlapping in a direction normal to a sheet surface of the workpiece. At the first transportation step, the heat storage member and the workpiece placed above the heat storage member are transported from the heating device to a lifting location while overlapping in the direction normal to the sheet surface of the workpiece. At the second transportation step, the workpiece placed above the heat storage member, when at the lifting location, is lifted upward by a transportation device and transported to a pressing location on a press machine. At the pressing step, the workpiece is processed by the press machine.

In the above-described manufacturing method, a sheet-shaped heat storage member and a sheet-shaped workpiece are heated by the heating device while overlapping in the top-bottom direction. After heating, the heat storage member and workpiece are transported from the heating device to the lifting location. Thus, in the stretch from the heating device to the location for lifting by the transportation device, the heat storage member and workpiece are overlapping in the top-bottom direction, with the upper surface of the heat storage member facing the lower surface of the workpiece. That is, the heat storage member and workpiece are overlapping in the direction normal to the sheet surface of the workpiece (i.e., direction perpendicular to the sheet surface). For example, the upper surface of the heat storage member faces the lower surface of the workpiece. This allows the heat storage member and workpiece to receive radiant heat from each other to provide supplemental amounts of heat to each other from completion of heating until lifting by the transportation device. Further, for example, if the heat storage member and workpiece are positioned to overlap with a distance created therebetween, air warmed by heat transfer from the workpiece and heat storage member facing each other stays in the space between the workpiece and heat storage member, providing the temperature-retaining effect. Thus, in hot press-forming, temperature drop in the workpiece during the time of transportation after heating of the workpiece until beginning of press-forming is reduced in a simple manner.

The workpiece is a material for hot pressing, i.e., member to be pressed; on the other hand, the heat storage member is not a material for hot pressing. The heat storage member is not a heat source generating thermal energy by itself, like a heater. The heat storage member may be merely a sheet-shaped rigid body. The sheet-shaped heat storage member is not limited to a flat sheet. For example, the sheet-shaped heat storage member may be a sheet including a projection protruding in the direction normal to the sheet surface, a sheet including an empty space extending therethrough, or a curved sheet, for example. The sheet-shaped workpiece, too, is not limited to a flat sheet. The sheet-shaped workpiece may be a sheet including a projection protruding in the direction normal to the sheet surface, a sheet including an empty space extending therethrough, or a curved sheet, for example. The workpiece may be an intermediate formed product produced by forming or processing a flat sheet (i.e., blank), for example.

It is preferable that, at the first transportation step, the heat storage member and the workpiece placed above the heat storage member are transported while overlapping each other in the direction normal to the sheet surface of the first workpiece, separated by a distance. This allows the upper and lower surfaces of the workpiece to be in contact with air during transportation. This reduces the differences between the conditions of the upper surface of the workpiece and those of the lower surface during transportation compared with implementations where the heat storage member and workpiece are in contact with each other. This reduces the difference between the quality of the upper surface of the workpiece and that of the lower surface.

At the heating step, the heat storage member and the workpiece may be heated while the heat storage member is placed on a tray body and the workpiece is placed on a first group of at least three struts extending upward from the tray body or the heat storage member to a location higher than an upper surface of the heat storage member. In such implementations, at the first transportation step, the heat storage member placed on the tray body and the workpiece placed on the first group of at least three struts may be transported, together with the tray body, from the heating device to the lifting location.

The heat storage member and workpiece are heated and transported while located above the tray and retaining their positional relationship. This allows the heat storage member and workpiece to receive radiant heat from each other to provide supplemental amounts of heat to each other from completion of heating until lifting by the transportation driven. Further, the workpiece is placed on the first group of struts extending to a location higher than the upper surface of the heat storage member. The first group of struts extend upward from the tray body or heat storage member. Thus, the group of struts do not present an obstacle when the workpiece placed on the first group of struts are lifted upward by the transportation device. It enables performing the lifting operation simply and quickly.

The heat storage member may include a projection protruding upward. At the heating step, the workpiece may be heated while placed on the projection of the heat storage member. At the first transportation step, the workpiece may be transported from the heating device to the lifting location while placed on the projection of the heat storage member.

This allows the heat storage member and workpiece to receive radiant heat from each other to provide supplemental amounts of heat to each other from completion of heating until lifting by the transportation device. Further, the workpiece is placed on the projection protruding upward. This enables the transportation device to perform the operation of lifting the workpiece upward in a simple and quick manner.

At the heating step and the first transportation step, the heat storage member may be placed on a second group of at least three struts extending upward from the tray body, and positioned to overlap the tray body in a top-bottom direction and separated from the tray body by a distance. This reduces deformation caused by heat of the tray body.

The tray body may be shaped to expand perpendicularly to a top-bottom direction and include an empty space extending through the tray body in the top-bottom direction. This facilitates transmission of heat from below the tray body to the heat storage member and workpiece during the heating step.

It is preferable that, at the heating step and the first transportation step, an outer edge of the heat storage member is located outward of an outer edge of the workpiece as viewed from above. This allows the entire workpiece to receive radiant heat from the heat storage member. This facilitates uniformly maintaining the temperature of the entire workpiece.

The workpiece may be a differential-thickness sheet including a large-thickness portion and a small-thickness portion. In such implementations, at the heating step and the first transportation step, at least part of the small-thickness portion of the workpiece may overlap the heat storage member as viewed from above. This reduces temperature drop in the small-thickness portion of the workpiece, which has a relatively small heat capacity and thus can experience temperature drop more easily. This achieves efficient reduction of temperature differences between the small- and large-thickness portions of the workpiece.

The workpiece may be a differential-thickness sheet including a large-thickness portion and a small-thickness portion, and the heat storage member may be a differential-thickness sheet including a large-thickness portion and a small-thickness portion. In such implementations, at the heating step and the first transportation step, at least part of the small-thickness portion of the workpiece may overlap the large-thickness portion of the heat storage member as viewed from above. This allows the small-thickness portion of the workpiece, which has a relatively small heat capacity within the workpiece and thus can experience temperature drop more easily, to receive radiant heat from the large-thickness portion of the heat storage member, which has a relatively large heat capacity within the member and provides relatively large amounts of radiant heat, to receive supplemental amounts of heat. This reduces temperature drop in the small-thickness portion of the workpiece more effectively. This, in turn, reduces the temperature differences between the small- and large-thickness portions of the workpiece more efficiently and, at the same time, efficiently reduces temperature drop in the workpiece as a whole.

At the first transportation step, the heat storage member and the workpiece may be transported while being covered with a shield from a front as determined along a direction of transportation. The shield prevents outside air from hitting the front side, along the direction of transportation, of the workpiece. This reduces temperature decrease beginning at the front side, along the direction of transportation, of the workpiece and, at the same time, prevents air staying between the workpiece and heat storage member, warmed by heat transfer from the workpiece and heat storage member, from moving to the outside. This retains the temperature-retaining effect. That is, temperature drop in the workpiece during transportation is further reduced.

For example, the sheet thickness of the heat storage member may be larger than the sheet thickness of the workpiece. In such implementations, temperature drop in the workpiece, which has a small sheet thickness, is reduced by radiant heat from the heat storage member, which has a relatively large heat capacity. This reduces temperature drop in the workpiece effectively.

For example, a relationship between a minimum sheet thickness t1 (mm) of a thinnest portion of the workpiece, on one hand, and a minimum sheet thickness t2 (mm) of a thinnest portion of the heat storage member, on the other, may be represented by the expression below. This effectively reduces temperature drop in the workpiece.

$$0.8 \leq t2/t1 \leq 20$$

At the heating step and the first transportation step, a relationship between a maximum distance D (mm) between the heat storage member and the workpiece as measured in a top-bottom direction, on one hand, and a minimum sheet thickness t1 (mm) of a thinnest portion of the workpiece, on the other, may be represented by the expression below. This effectively reduces temperature drop in the workpiece.

$$D \leq 120t1$$

It is preferable that, at the heating step and the first transportation step, a distance between an edge of the heat storage member as viewed from above and an edge of the workpiece as viewed from above, $\Delta W$, is 10 to 200 mm. This effectively reduces temperature drop in the workpiece. This effect is produced particularly significantly if the outer edge of the heat storage member is located outward of the outer edge of the workpiece by a distance $\Delta W$ of 10 to 200 mm.

At the heating step and the first transportation step, part of the heat storage member may extend upward outside an outer edge of the workpiece as viewed from above. Thus, radiant heat between the side edges of the workpiece and the portions of the heat storage member that extend upward provides mutual supplemental amounts of heat. It effectively reduces temperature drop in the workpiece. By way of example, outside the outer edge of the workpiece as viewed from above, part of the heat storage member may extend upward to reach a height that is at least equal to that of the workpiece. Thus, the sides of the workpiece are covered with the heat storage member. Thus, in addition to the supplemental amounts of heat mutually provided via radiant heat from the side edges of the workpiece and the portions of the heat storage member that extend upward, temperature drop through the edge face of the workpiece located at the front as determined along the direction of transportation is reduced as is the case in implementations having shields and, at the same time, air staying between the workpiece and heat storage member warmed by heat transfer from the workpiece and heat storage member is prevented from moving to the outside. This effectively retains the temperature-retaining effect for the workpiece.

At the heating step, the workpiece placed above the heat storage member and heated by the heating device may include a first workpiece and a second workpiece. At the first transportation step, the workpiece placed above the heat storage member and transported may include a first workpiece and a second workpiece. In such implementations, the second transportation step may include:

driving a pair of first arms rotatably mounted on a base frame included in the transportation device to support a lower surface, at both ends, of the first workpiece of the at least two workpieces using claws of the pair of first arms and lift the workpiece;

driving, using a system separate from that for the pair of first arms, a pair of second arms rotatably mounted on the base frame of the transportation device to support a lower surface, at both ends, of the second workpiece of the at least two workpieces using claws of the pair of second arms and lift the workpiece;

transporting the first workpiece with the lower surface supported, at both ends, by the claws of the pair of first arms of the transportation device and the second workpiece with the lower surface supported, at both ends, by the claws of the pair of second arms, while the workpieces overlap each other in the direction normal to the sheet surface of the first workpiece;

driving the pair of first arms to lower the first workpiece supported by the pair of first arms to a pressing location in the press machine; and

driving, using the system separate from that for the pair of first arms, the pair of second arms to lower the second workpiece supported by the pair of second arms to a pressing location in the press machine.

The transportation device transports the workpieces while supporting the lower surface, at both ends, of the first workpiece using claws of a pair of first arms and supporting the lower surface, at both ends, of the second workpiece using claws of a pair of second arms. This retains the distance between the two workpieces during transportation in a stable manner. Further, since rotation of the first and second arms places each of the pair of first claws and the pair of second claws on the lower surface, at both ends, of the relevant workpiece, the operation of lifting and lowering a workpiece can be performed in a simple and reliable manner. That is, a simple apparatus construction may be used to transport the first and second workpieces while they can efficiently receive heat radiation. Further, the first drive unit drives the first arms and, independently therefrom, i.e., in a separate system, the second drive unit drives the second arms. This enables lifting the first and second workpieces successively and lowering the first and second workpieces successively onto different pressing locations. Thus, the transportation device can transport the first and second workpieces in a simple and efficient manner while reducing temperature drop in the workpieces. Thus, in hot press-forming, temperature drop in the workpieces can be reduced in a simple manner during the time of transportation after heating of the workpieces until beginning of press-forming.

Lateral direction of the base frame means a direction in a plane perpendicular to the top-bottom direction. The lateral direction in which the pair of first arms are arranged and the lateral direction in which the pair of second arms are arranged may be the same, or may be different within the plane perpendicular to the top-bottom direction.

A tray according to an embodiment of the present invention includes: a tray body; a sheet-shaped heat storage member placed on the tray body; and a first group of at least three struts extending upward from the tray body or the heat storage member to a location higher than an upper surface of the heat storage member. The first group of struts are disposed such that imaginary straight lines connecting the struts form at least one triangle when viewed from above.

In the above-described arrangement, a heat storage member placed on the tray body and a workpiece placed on the first group of struts are supported above the tray while overlapping in the top-bottom direction, i.e., in the direction normal to the sheet surface of the workpiece. Thus, the heat storage member and workpiece, overlapping in the top-bottom direction, can be heated in the heating device and then transported from the heating device to the lifting location. The first group of struts extend upward from the tray body or heat storage member. Thus, the first group of struts do not present an obstacle when the workpiece placed on the first group of struts is lifted upward by the transportation device. It enables performing the lifting operation in a simple and quick manner. This allows the heat storage member and workpiece to receive radiant heat from each other to provide supplemental amounts of heat to each other from completion of heating until lifting by the transportation device. As a result, in hot press-forming, temperature drop in the workpiece during the transportation time after heating of the workpiece until beginning of press-forming can be reduced in a simple manner. That is, a tray for heating/transportation of material for hot press-forming is provided that reduces temperature drop in the material during the transportation time in a simple manner.

The group of struts may be fixed to the tray body or the heat storage member. That is, the group of struts may be fixedly mounted on the tray body or the heat storage member. This simplifies the construction of the tray. On the contrary, for example if the heights of the individual struts of the group are variable relative to the tray body, a heat-resistant driving mechanism is required. In such implementations, the construction is complicated and requires increased manufacturing costs.

A tray according to an embodiment of the present invention includes: a tray body; and a sheet-shaped heat storage member placed on the tray body. The heat storage member may include a projection protruding upward to allow a sheet-shaped workpiece to be placed thereon. In this arrangement, the heat storage member placed on the tray body and the workpiece placed on the projection of the heat storage member are supported above the tray while overlapping in the top-bottom direction, i.e., direction normal to the sheet surface of the workpiece. This allows the heat storage member and workpiece to receive radiant heat from each other to provide supplemental amounts of heat to each other from completion of heating until lifting by the transportation device. As a result, in hot press-forming, temperature drop in the workpiece during the transportation time after heating of the workpiece until beginning of press-forming can be reduced in a simple manner.

The tray may further include: a second group of at least three struts extending upward from the tray body and positioned at different locations from those of the struts of the first group as viewed from above. The heat storage member is placed on the second group of struts to overlap the tray body in a top-bottom direction and be separated therefrom by a distance. This reduces deformation of the tray body due to heat.

The tray body may be shaped to expand perpendicularly to a top-bottom direction and include an empty space extending through the tray body in the top-bottom direction. This facilitates transmission of heat from below the tray body to the heat storage member and workpiece during the heating step.

The tray body may be constructed such that an area of the empty space is larger than an area of a constituent member of the tray body as viewed from above. This facilitates transmission of heat from below the tray body during the heating step to the heat storage member and workpiece. At least one of the first group of struts and the second group of struts may be located between adjacent empty spaces of the tray body as viewed from above. This further facilitates transmission of heat from below the tray body through the empty spaces around the first group of struts and/or the second group of struts up to the workpiece placed on the first group of struts and/or the heat storage member placed on the second group of struts.

A relationship between a height ΔH (mm) of one strut of the first group whose top is located highest as measured from an upper surface of the heat storage member, on one hand, and a minimum sheet thickness t2 (mm) of a thinnest portion of the heat storage member, on the other, may be represented by the expression below. This effectively reduces temperature drop in the workpiece.

$$\Delta H/t2 \leq 30$$

The first group of struts may be positioned inward of an outer edge of the heat storage member placed on the tray body as viewed from above. This allows the workpiece to be positioned to overlap the heat storage member and inward of the outer edge of the heat storage member as viewed from above.

The tray may further include: a shield adapted to cover, along a direction perpendicular to the top-bottom direction, a height range between an upper surface of the heat storage member and an upper end of one strut of the first group whose top is located highest. The shield prevents outside air from hitting the front face, as determined along the direction of transportation, of the workpiece, thereby reducing temperature drop through the front face, as determined along the direction of transportation, of the workpiece and, at the same time, preventing air staying between the workpiece and heat storage member warmed by heat transfer from the workpiece and heat storage member from moving to the outside. This retains the temperature-retaining effect. That is, temperature drop in the workpiece on the tray during transportation is further reduced.

The shield may have an inclined surface inclined so as to be located closer to the first group of struts going from a center toward an end. This allows outside air that has hit the shield during transportation of the workpiece placed on the tray to flow away from the heat storage member and workpiece along the inclined surface. This increases the effect of reducing temperature drop in the workpiece during transportation.

The tray body may have a long-length direction and a short-length direction as viewed from above. The shield may cover the tray body along the long-length direction as viewed from above. Covering the tray body with a shield along the long-length direction further increases the effect of reducing temperature drop in the workpiece placed on the tray and transported.

A hot-press manufacturing line according to an embodiment of the present invention includes: the above-described tray; a heating device adapted to heat a workpiece placed on the tray; a transportation path provided between the heating device and a lifting location for the workpiece to transport the tray from the heating device to the lifting location; a transportation device adapted to support, and lift upward, the workpiece placed on the tray when at the lifting location; at least one press machine including at least one pair of die parts; and a moving device adapted to move the transportation device between the lifting location and a pressing location located between the at least one pair of die parts.

The transportation device may include: a base frame movable in a lateral direction perpendicular to a top-bottom direction; a pair of first arms rotatably mounted on the base frame; a pair of second arms rotatably mounted on the base frame; a first drive unit adapted to drive the first arms; and a second drive unit adapted to drive the second arms.

The pair of first arms include: a pair of first bases arranged in the lateral direction of the base frame and extending from the base frame in the top-bottom direction; and a pair of first claws extending, with a bend, from the respective first bases in the lateral direction.

The pair of second arms include: a pair of second bases arranged in the lateral direction of the base frame and extending from the base frame in the top-bottom direction; and a pair of second claws extending, with a bend, from the respective second bases in the lateral direction.

The first drive unit rotates the pair of first arms relative to the base frame to change a lateral distance between the first claws.

The second drive unit rotates the pair of second arms relative to the base frame to change a lateral distance between the second claws.

The first and second drive units are configured, independently from each other, to be capable of controlling rotation of the first arms and rotation of the second arms, respectively.

The pair of first claws are capable, when close to each other in the lateral direction, of supporting a lower surface of a first workpiece at both ends as determined along the lateral direction.

The pair of second claws are capable, when close to each other in the lateral direction, of supporting a lower surface of a second workpiece at both ends as determined along the lateral direction.

A location of the pair of first claws in the top-bottom direction and a location of the pair of second claws in the top-bottom direction are different from each other.

Now, embodiments of the present invention will be described in detail with reference to the drawings. The same or corresponding components in the drawings are labeled with the same reference numerals, and their description will not be repeated. The size ratios of the components shown in the drawings do not necessarily represent their actual size ratios.

[Exemplary Construction of Apparatus]

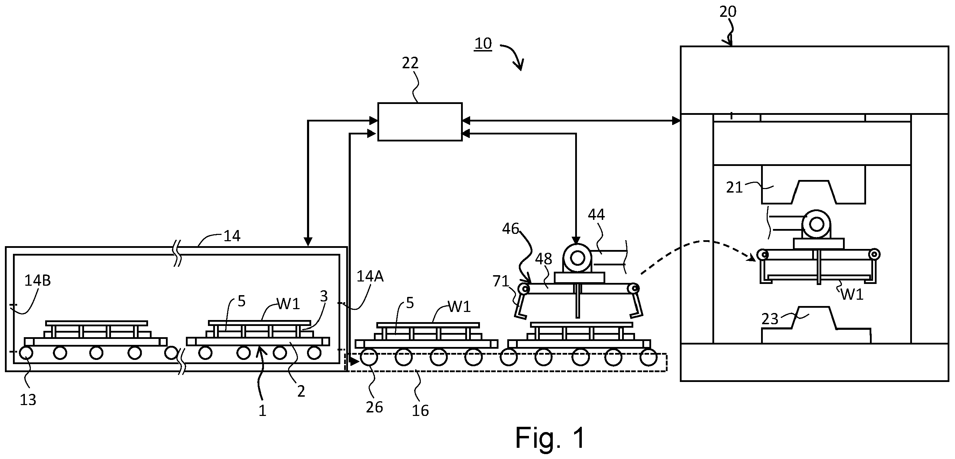

FIG. 1 is a schematic view of a hot-press manufacturing line 10 according to an embodiment. The hot-press manufacturing line 10 includes a heating device 14, a transportation table 16, a manipulator 44, a transportation device 46, a press machine 20, and a controller 22. The transportation table 16 is located near an outlet 14A of the heating device 14. The transportation table 16 is located between the heating device 14 and press machine 20.

In the heating device 14, a heat storage member 5 and a workpiece W1 are placed on a single tray 1 so as to overlap in the top-bottom direction. After the heat storage member 5 and workpiece W1 placed on the tray 1 are heated by the heating device 14, the member and workpiece, together with the tray 1, are moved to exit the heating device 14. The tray 1, with the heat storage member 5 and workpiece W1 placed thereon, exits the heating device 14 and is transported on the transportation table 16 to a location for lifting by the transportation device 46.

(Heating Device)

The heating device 14 heats an object to be heated. The heating device 14 may be, for example, a resistance heating furnace, a gas heating furnace, a far-infrared heating furnace, or a near-infrared heating furnace. The heating device 14 is not limited to a heating furnace, and may be, for example, a high-frequency induction heating device, a low-frequency induction heating device, or an electrical heating device that causes electricity to directly flow through the object to be heated to heat the object. The heating device 14 may include a heating chamber. The heating device 14 may include, inside the heating chamber, a plurality of in-chamber rollers 13 that are driven by a driving mechanism, not shown, and rotate. Rotating the in-chamber rollers 13 transports the object being heated (i.e., heat storage member 5 and workpiece W1) on the in-chamber rollers 13. The outlet 14A and an inlet 18B of the heating device 14 are located forward and rearward, respectively, as determined along the direction of transportation of the object being heated in the heating chamber.

(Transportation Table)

The transportation table 16 includes a plurality of transportation rollers 26 that are driven by a driving mechanism, not shown, and rotate. As the transportation rollers 26 rotate in synchronization with the in-chamber rollers 13, the object being transported is transported between the transportation table 16 and the interior of the heating chamber of the heating device 14. The transportation rollers 26 are spaced apart from one another. The transportation table 16 is an example of a transportation path along which the tray 1 with the heated workpiece W1 and heat storage member 5 placed thereon is transported from the heating device 14 to the lifting location. A lifting location for the workpiece by the transportation device 46 is provided above the transportation table 16. It will be understood that the construction of the transportation path is not limited to the transportation table 16 shown in FIG. 1. For example, the transportation path may be a belt conveyor, rails, or the like. Further, although the lifting location is on the transportation path in the implementation shown in FIG. 1, the lifting location need not be on the transportation path. The lifting location may be on a stand, for example, provided separately from the transportation path and located at the destination of transportation.

(Press machine)

The press machine 20 includes a lower die part 23 and an upper die part 21 for press-forming an object to be pressed. By way of example, the lower die part 23 is constituted by a punch; by way of example, the upper die part 21 is constituted by a die block. Channels for coolant may be provided in the upper and lower die parts 21 and 23. Thus, heat taken from the object being pressed during pressing-forming may be released by means of coolant. A workpiece may be positioned between the lower and upper die parts 23 and 21 of the press machine 20. With the workpiece positioned, the lower and upper die parts 23 and 21 are moved closer to each other to the bottom-dead center to press-form the workpiece. The operation of the lower and upper die parts 23 and 21 may be controlled by the controller 22, for example. The lower and upper die parts 23 and 21 of the press machine 20 may be shaped so as to be capable of simultaneously press-forming a plurality of workpieces to simultaneously produce a plurality of press-formed products. Alternatively, a plurality of press machines 20 may be provided. For example, two press machines may be provided, each including one pair of die parts.

(Manipulator)

The manipulator 44 uses the transportation device 46 to transport the object being transported from the transportation table 16 to the press machine 20. The manipulator 44 is an example of a moving device. The transportation device 46 operates by lifting a workpiece, i.e., object being transported, holding it, and placing it on a surface. The manipulator 44 controls the location and attitude of the transportation device 46. The transportation device 46 may be an end effecter of the manipulator 44. The manipulator 44 moves the transportation device 46 between the lifting location on the transportation table 16 and the pressing location between the pair of die parts (i.e., upper and lower die parts 21 and 23) in the press machine 20. The manipulator 44 includes a base rotatable about at least one axis and an arm extending from the base and having at least one joint. The transportation device 46 is rotatably mounted on the distal end of the arm. A moving device for moving the transportation device 46 is not limited to a manipulator. For example, a moving device may include rails connecting the transportation table 16 and press machine 20 and a suspension device for suspending the transportation device 46 above the rails and moving it up and down.

(Controller)

The Controller 22 controls the heating device 14, transportation table 16, press machine 20, and manipulator 44 (and thus transportation device 46). The controller 22 is constituted by one or more computers each including a processor and memory, for example. The control of these components is implemented by the processor executing a program stored on the memory. The controller 22 transmits control signals or control data to the heating device 14, transportation table 16, press machine 20, and manipulator 44 (and thus transportation device 46). Further, the controller 22 may receive signals or data indicating the states of these components. By way of example, the controller 22 may include control units (constituted by, for example, circuits or processors) distributed among the heating device 14, transportation table 16, manipulator 44, and press machine 20 for controlling these devices. In such implementations, the controller 22 may include an overall-control computer that supplies the control units of the various devices with control information to control the operation of the entire hot-press manufacturing line 10. The operation of the arms 71 of the transportation device 46, described further below, may be controlled by part of the controller 22, such as the control unit of the manipulator 44.

(Transportation Device)

The transportation device 46 includes a base frame 48, as well as at least one pair of arms 71 rotatably mounted on the base frames 48. A joint 56 is provided on the upper surface of the base frame 48 to be connected to the manipulator 44. The joint 56 is connected to the manipulator such that the base frame 48 is rotatable, about an axis in the top-bottom direction, relative to the manipulator 44.

The pair of arms 71 are separated from each other in a lateral direction of the base frame 48 (i.e., direction perpendicular to the top-bottom direction). Each of the arms 71 includes a base extending from the base frame 48 in the top-bottom direction, and a claw extending, with a bend, from the base in the lateral direction. Controlling rotation of the arms 71 relative to the base frame 48 controls the arms to be in a closed state, where the claws of the arms 71 are located closer to each other, and an open state, where they are located far away from each other.

(Tray)

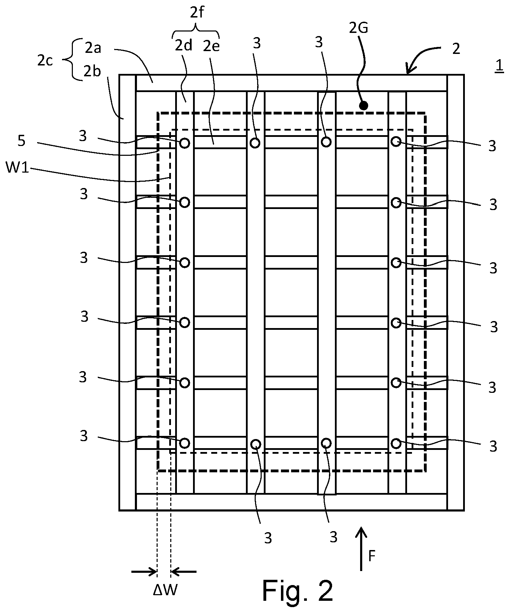

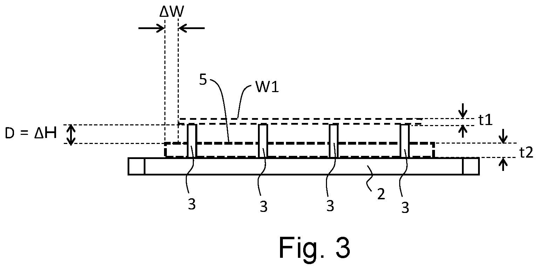

FIG. 2 is a top view of the tray 1. FIG. 3 is a side view of the tray 1 shown in FIG. 2 as viewed in the direction of arrow F. The tray 1 is a tray used in heating/transporting of the material (i.e., workpiece) for hot pressing. The tray 1 is constructed to resist heating temperatures for workpieces. In the implementation shown in FIG. 2, the tray body 2 is shaped to expand in a plane perpendicular to the top-bottom direction and includes empty spaces 2G extending in the top-bottom direction through the tray body. When viewed from above, the total area of the empty spaces 2G is larger than the total area occupied by the constituent members of the tray body 2. The tray 1 includes a heat storage member 5 placed on the tray body 2. The tray 1 includes a plurality of struts 3 extending to locations higher than the heat storage member 5.

(Tray Body)

In the implementation shown in FIG. 2, the tray body 2 includes a frame 2c and rod members 2f located inside the frame 2c and bridging the frame. The frame 2c includes a pair of vertical frame members 2b and a pair of horizontal frame members 2a. The pair of vertical frame members 2b are located parallel to each other, and laterally separated. The pair of horizontal frame members 2a are located between the vertical frame members 2b and parallel to each other, and vertically separated. The pair of vertical frame members 2b and the pair of horizontal frame members 2a form a rectangular frame 2c when viewed from above. The rod members 2f include vertical rod members 2d and horizontal rod members 2e. The vertical rod members 2d bridge the pair of horizontal frame members 2a. The horizontal rod members 2e bridge the pair of vertical frame members 2b. The rod members 2f are disposed grid-wise inside the frame 2c.

The rod members 2f (i.e., at least one of the set of vertical rod members 2d and the set of horizontal rod members 2e) may be constructed to be adjustable in position relative to the frame 2c. For example, the frame 2c may be provided with a plurality of positioning holes or engagement lugs. In such implementations, the rod members 2f are fixed to the holes or engagement lugs on the frame 2c using fastening members, for example, as necessary. The positions of the rod members 2f relative to the frame 2c can be adjusted by changing the holes or engagement lugs, i.e. locations, to which the rod members 2f are fixed.

The construction of the tray body 2 is not limited to the implementation shown in FIG. 2. For example, the tray body may have the shape of a ladder including a pair of vertical rod members disposed generally parallel and separated from each other, and a plurality of horizontal rod members located between the vertical rod members and bridging the pair of vertical rod members in the direction perpendicular thereto. Alternatively, the tray body may be constituted by a sheet-shaped member including a plurality of holes extending through the tray body in the top-bottom direction, which serve as empty spaces.

The constituent members of the tray body 2 (in the implementation of FIG. 2, frame 2c and rod members 2f) may be pipes or solid members. Alternatively, the constituent members of the tray body 2 may be angle members with an L-shaped cross section, or channel members with a U-shaped cross section. The constituent members of the tray body 2 are not limited to any particular material, and may be formed from a heat-resistant material, such as heat-resistant steel or ceramics, for example. It is desirable that the maximum use temperature of the constituent members be, for example, not lower than 900 °C, a temperature range commonly found in heating devices, and not higher than 1050 °C, which is an upper-limit setting temperature for heating devices. Examples of heat-resistant steels (heat-resistant alloy steels) that can be used for the constituent members include SCH22 (0.4C-25Cr-20Ni), SCH24 (0.4C-25Cr-35Ni-Mo, Si). Constituent members of the tray body 2 formed from a heat-resistant alloy steel can be easily processed and produced.

(Heat Storage Member)

The heat storage member 5 is placed on the tray body 2. The heat storage member 5 is a sheet-shaped member. The heat storage member 5 has the shape of a rectangle as viewed from above. The heat storage member 5 has through-holes for allowing the struts 3 to extend therethrough. The struts 3 extend upward through through-holes of the heat storage member 5 placed on the tray body 2. The struts 3 may be fixed to the tray body 2. For example, the struts 3 may be inserted into holes of the tray body 2 and attached to the tray body 2. In such implementations, the struts 3 are fixed to the tray body 2 as they are inserted through both holes of the tray body 2 and through-holes in the heat storage member. In other implementations, for example, the struts 3 may be fixed to the tray body 2 by a male thread provided on the outer periphery of an end of a strut 3 engaging a female thread on the inner periphery of a hole in the tray body 2. Alternatively, the struts 3 may be press-fit into holes in the tray body 2. It will be understood that the means for fixing the struts 3 are not limited to holes in the tray body 2. The struts 3 may be fixed to the tray body 2 by other fixing means. Alternatively, the struts 3 may be fixed to the heat storage member 5 by insertion into holes in the heat storage member 5. In such implementations, the holes in the heat storage member 5 into which the struts 3 are inserted may be through-holes, or recessed holes that do not extend through the member.

The heat storage member 5 is not limited to any particular material, and may be formed from a heat-resistant material, such as heat-resistant metal or ceramics, for example. A heat-resistant metal that can be used as the material of the heat storage member 5 may be, for example, an Fe-based material such heat-resistant steel, stainless steel or carbon steel, or Al-based or Ti-based material, or Ni-based alloy or other alloys. The material of the heat storage member may be the same as the material of the workpiece. Further, the lower the heat conductivity of the heat storage member 5, the better. If heat conductivity is low, temperature does not easily decrease, such that the effect of providing supplemental amounts of heat to the workpiece W1, produced by radiant heat, can be maintained longer. For example, the heat storage member 5 may be formed from a material that has a heat conductivity that is generally equal to or lower than that of the workpiece being heated. Although not limiting, the heat conductivity of the heat storage member 5 is preferably not higher than 200 W/mK, more preferably not higher than 100 W/mK, and yet more preferably not higher than 70 W/mark, for example. After the workpiece W1 has been lifted by the transportation device 46 and transported to its pressing location, the heat storage member 5 and tray 1 may be used for the heating and transportation steps for other workpieces.

(Struts)

The struts 3 extend upward from the tray body 2 to locations higher than the upper surface of the heat storage member 5. A plurality of struts 3 are disposed such that the imaginary lines connecting the struts 3 form at least one triangle as viewed from above. The plurality of struts 3 are constructed to allow the workpiece W1 to be placed thereon so as to overlap the heat storage member 5 in the top-bottom direction and be separated therefrom by a distance. In the implementation shown in FIG. 2, each of the struts 3 is located between adjacent empty spaces 2G of the tray body 2 when viewed from above. That is, each the struts 3 is located on a constituent member of the tray body 2 that is sandwiched by adjacent empty spaces 2G.

In the implementation shown in FIG. 3, the plurality of struts 3 extend through the heat storage member 5. The heat storage member 5 has empty holes that allow the plurality of struts 3 to extend therethrough. Thus, as shown in FIG. 2, a plurality of struts 3 may be positioned inside the outer edges of the heat storage member 5 as viewed from above. In such implementations, the workpiece W1 may be positioned on the plurality of struts 3 such that the entire workpiece W1, which has a smaller surface area than the heat storage member 5, overlaps the heat storage member 5 as viewed from above. In the implementation shown in FIG. 3, the heat storage member 5 is a flat sheet; alternatively, the heat storage member 5 may be shaped to conform to the workpiece W1, for example. In such implementations, the distance between the workpiece W1 and heat storage member 5 can be made close to uniform across the entire surface.

(Exemplary Struts with Different Heights)

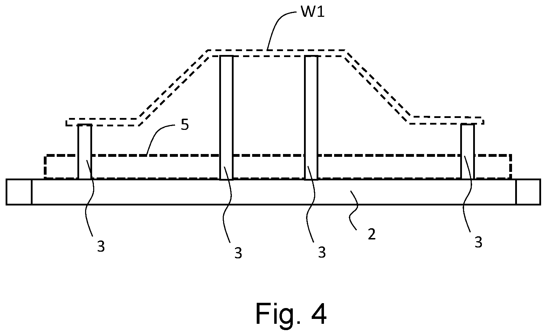

In the implementation shown in FIGS. 2 and 3, the workpiece W1 is a flat sheet. In such implementations, the plurality of struts 3 have the same height. If the workpiece W1 is not a flat sheet but a curved intermediate formed product, the plurality of struts 3 include struts with different heights. FIG. 4 is a side view of a tray with struts accommodating a workpiece W1 that is not a flat sheet. In this implementation, the workpiece W1 has a hat-shaped cross section. In this implementation, a plurality of struts 3 with different heights are provided to conform to the shape of the workpiece W 1.

(Exemplary Struts for Workpiece and Heat Storage Member)

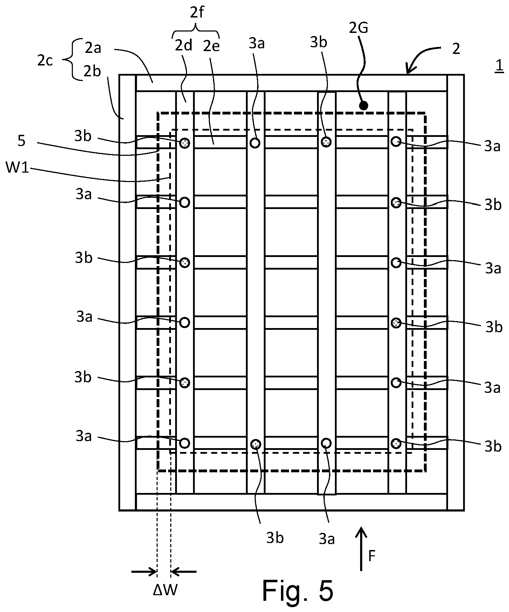

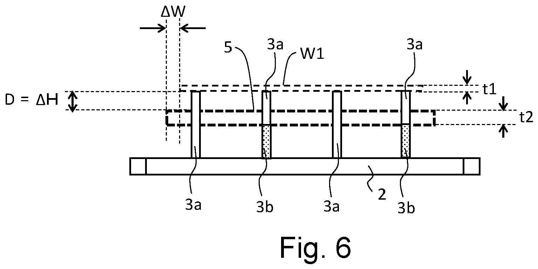

Struts may be provided on the tray body 2 to allow the heat storage member 5 to be placed thereon. FIG. 5 is a top view of an exemplary tray 1 including struts for supporting the heat storage member 5. FIG. 6 is a side view of the tray 1 shown in FIG. 5 as viewed in the direction of arrow F. In the implementation shown in FIGS. 5 and 6, a plurality of struts 3 include a first group of struts 3a allowing the workpiece W1 to be placed thereon, and a second group of struts 3b allowing the heat storage member 5 to be placed thereon. The second group of struts 3b extend upward from the tray body 2. The heat storage member 5 is placed on the second group of struts 3b. Thus, the second group of struts 3b support the heat storage member 5 in such a manner that the member is spaced apart from the tray body 2.

The first group of struts 3a include at least three struts, where the imaginary straight lines connecting the struts form a triangle when viewed from above. The second group of struts 3b include at least three struts, where the imaginary straight lines connecting the struts form a triangle when viewed from above. Every one of the struts of the second group 3b is at a location different from that of any one of the struts of the first group 3a when viewed from above. The top of every one of the struts of the first group 3a is located higher than the top of that strut of the second group 3b whose top is located lowest. Thus, the first group of struts 3a are capable of supporting the workpiece W1 such that the workpiece is separated from, and located above, the heat storage member 5 supported by the second group of struts 3b.

The struts of the first group 3a and those of the second group 3b are not limited to any particular numbers. The number of the struts of the first group 3a and the number of the struts of the second group 3b may be the same or different. For example, the number of the struts of the first group 3a may be larger than the number of the struts of the second group 3b if the support for the workpiece W1 is to be stronger than that for the heat storage member 5 to take account of the characteristics and/or support locations of the workpiece W1 and heat storage member 5, for example.

(Exemplary Struts Extending from Heat Storage Member)

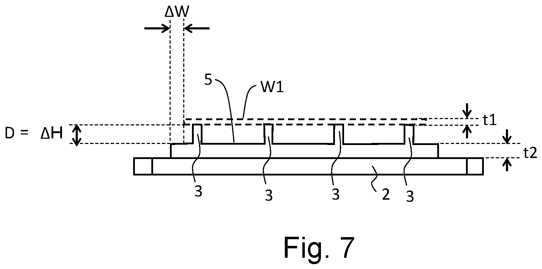

FIG. 7 is a side view of a tray with struts extending upward from the heat storage member 5. In the implementation shown in FIG. 7, the projections extending upward from the upper surface of the heat storage member 5 constitute the struts 3. In this implementation, the heat storage member 5 and struts 3 are integrally formed.

Other arrangements with struts provided on the heat storage member 5 include arrangement with struts inserted into recesses (i.e., holes) formed in the upper surface of the heat storage member 5, for example. Starting from the arrangement shown in FIG. 7, the tray body 2 may be omitted, where the heat storage member 5 also functions as the tray body 2. The struts 3 shown in FIG. 7 are examples of projections of the heat storage member protruding upward.

The struts 3 may each have the shape of a column, such as a circular column or a rectangular column, or a cone, such as a circular cone or a pyramid, for example. Each strut 3 may be a solid member or a pipe. The struts 3 are not limited to any particular material, and may be formed from a heat-resistant material, such as heat-resistant steel or ceramics, for example. It is desirable that the maximum use temperature of the struts 3 be, for example, not lower than 900 °C, a temperature range commonly found in heating devices, and not higher than 1050 °C, which is an upper-limit setting temperature for heating devices. Examples of heat-resistant steels (heat-resistant alloy steels) that can be used for the constituent members of the struts 3 include SCH22 (0.4C-25Cr-20Ni) and SCH24 (0.4C-25Cr-35Ni-Mo, Si).

The struts 3 may be detachable from the tray body 2 or heat storage member 5. For example, the struts 3 may be attached to the tray body 2 by inserting the struts 3 into holes formed in constituent members of the tray body 2 (in the implementation of FIG. 2, frame members 2c and rod members 2f) or the heat storage member 5. In such implementations, a female thread may be formed in the inner periphery of a hole in the tray body 2 or heat storage member 5, and a male thread may be formed on an end of a strut 3. This allows the struts 3 to be fixed to the tray body 2 or heat storage member 5 by means of threads.

(Exemplary Arrangement of Heat Storage Member and Workpiece)

In the implementation shown in FIG. 3, the height of the struts 3 as measured from the upper surface of the heat storage member 5 (i.e., length in the top-bottom direction, i.e., dimension from the upper surface of the heat storage member 5 to the top ends of the struts 3) is denoted by $\Delta H$. Thus, at least three struts with tops that are located higher than the heat storage member 5 by $\Delta H$ may be provided. This allows the heat storage member 5 and workpiece W1 to be positioned to overlap in the top-bottom direction, separated by $\Delta H$. For example, if the workpiece W1 is a flat sheet, as in the implementations of FIGS. 3, 6 and 7, all the struts 3 (i.e., first group of struts 3a) have the same height. Thus, the top of every one of the struts 3 (i.e., first group of struts 3a) is located higher than the upper surface of the heat storage member 5 by $\Delta H$.

The distance between the heat storage member 5 and workpiece W1 placed on the tray 1 is determined by the height ΔH as measured from the upper surface of the heat storage member 5 to the top ends of the struts 3. That is, the distance D, in the top-bottom direction, between the heat storage member 5 and workpiece W1 above the tray 1 during heating and transportation is determined by ΔH. The distance D for the tray 1 during heating and transportation is preferably not larger than 100 mm, for example. The smaller the distance D, the better to allow the heat storage member 5 and workpiece W1 on the tray 1 to receive radiant heat from each other to reduce temperature drop. The maximum value of the distance D is more preferably not larger than 50 mm, more preferably not larger than 30 mm, and yet more preferably not larger than 10 mm. No particular lower limit for the distance D is specified; the distance required for the operation of placing the workpiece W1 on the tray 1 and lifting them therefrom represents the lower limit for the distance D. A preferred range for ΔH is the same as the preferred range for the distance D.

The relationship between the maximum distance D (mm) between the heat storage member 5 placed on the tray body 2 and the workpiece W1 placed on the struts 3 as measured in the top-bottom direction, on the one hand, and the minimum sheet thickness t1 (mm) of the thinnest portion of the workpiece W1, on the other, is preferably represented by the expression below. This effectively reduces temperature drop in the workpiece W1 on the tray 1 during transportation.

$$D \leq 120t1$$

The larger the sheet thickness t2 of the heat storage member 5, the more significant the effect of reducing temperature drop in the workpiece W1 during transportation. On the other hand, the larger the sheet thickness t2 of the heat storage member 5, the greater the energy required to heat the workpiece W1 and heat storage member 5 to a predetermined temperature during the heating step. Further, the degree of temperature drop in the workpiece W1 on the tray 1 during transportation depends on both the sheet thickness t1 of the workpiece W1 and the sheet thickness t2 of the heat storage member 5. In view of all this, t2/t1 is preferably $0.8 \leq t2/t1 \leq 20$, for example. A lower limit for t2/t1 is more preferably 1.0, and yet more preferably 2.0. An upper limit for t2/t1 is more preferably 15, and yet more preferably 10. If portions of a single workpiece W1 have different sheet thicknesses, the sheet thickness t1 is defined as the smallest sheet thickness of the workpiece W1. If the heat storage member 5 has portions with different sheet thicknesses, the sheet thickness t2 is defined as the smallest sheet thickness of the heat storage member 5.

In the implementations shown in FIGS. 2 to 7, the ends (i.e., edges) of the heat storage member 5 are located outside the ends (i.e., edges) of the workpiece W1 as viewed from above. Further, in these implementations, the area of the sheet surfaces of the heat storage member 5 as viewed from above is larger than the area of the sheet surfaces of the workpiece W1 as viewed from above. This allows substantially the entire lower surface of the workpiece W1 to receive radiant heat from the heat storage member 5. Thus, the workpiece W1 and heat storage member 5 placed on the tray 1 may have different sizes as viewed from above. The heat storage member 5 overlaps substantially the entire workpiece W1 in the top-bottom direction.

The distance ΔW between an edge of the heat storage member 5 placed on the tray body 2 as viewed from above and an edge of the workpiece W1 placed on the first group of struts 3a as viewed from above is not limited to any particular value, but is preferably 10 to 200 mm. If ΔW is too small, this decreases the effect of reducing temperature drop in the end portions of the workpiece W1. In view of this, the minimum value of ΔW is more preferably not smaller than 20 mm, and yet more preferably not smaller than 30 mm. If ΔW is too large, this increases the energy required to heat the heat storage member 5 in addition to the workpiece W1. In view of this, the maximum value of ΔW is more preferably not larger than 150 mm, and yet more preferably not larger than 100 mm.

ΔW is defined as the distance between an edge of the workpiece and an edge of the heat storage member as measured in the direction perpendicular to the line of the edge of the workpiece as viewed from above (if the line of the edge is a curved line, direction normal thereto). If the workpiece W1 is not a flat sheet but a curved intermediate formed product, too, the heat storage member 5 and workpiece W1 may be positioned such that en end (i.e., edge) of the heat storage member 5 is located outward of an end (i.e. edge) of the workpiece W1 as viewed from above. In such implementations, too, ΔW is defined as the distance between an edge of the heat storage member 5 and an edge of the workpiece W1 as viewed from above. Furthermore, the area of the heat storage member 5 placed on the tray body 2 as viewed from above may be larger than the area of the workpiece W1 placed on the struts 3 as viewed from above.

(Exemplary Arrangement of Differential-Thickness Sheet)

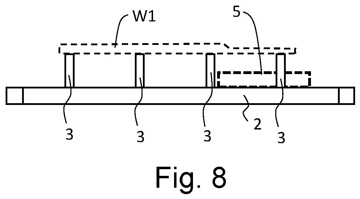

The workpiece W1 may be a differential-thickness sheet including a large-thickness portion and a small-thickness portion. FIG. 8 is a side view showing an exemplary arrangement of a workpiece W1 that is a differential-thickness sheet and a heat storage member 5. In the implementation shown in FIG. 8, the heat storage member 5 is such that it overlaps part of the workpiece W1, not the entire workpiece. The heat storage member 5 is positioned to overlap the small-thickness portion of the workpiece W1 placed on the struts 3 as viewed from above. This reduces temperature drop in the small-thickness portion of the workpiece W1. Further, the area of the heat storage member 5 is smaller than in implementations with a heat storage member 5 overlapping the entire workpiece W1. This reduces the energy required to heat the heat storage member 5. To reduce temperature drop in the small-thickness portion, the heat storage member 5 is preferably positioned to overlap the entire small-thickness portion of the workpiece W1 as viewed from above. It will be understood that the effect of reducing temperature drop in the small-thickness portion will be produced even if the heat storage member 5 is positioned to overlap part of the small-thickness portion of the workpiece W1 as viewed from above. For example, if the small-thickness portion of the workpiece W1 includes a sheet edge, temperature drop in the small-thickness portion is efficiently reduced if the workpiece W1 and heat storage member 5 are positioned such that the sheet edge, which is part of the small-thickness portion of the workpiece, overlaps the heat storage member as viewed from above, since a sheet edge of the small-thickness portion can experience temperature drop particularly easily.

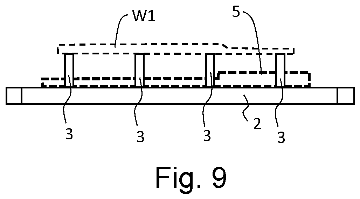

FIG. 9 is a side view showing another arrangement of a workpiece W1 that is a differential-thickness sheet and a heat storage member 5. In the implementation shown in FIG. 9, the heat storage member 5 is also a different-thickness sheet including a large-thickness portion and a small-thickness portion. In the implementation shown in FIG. 9, the large-thickness portion of the heat storage member 5 placed on the tray body 2 overlaps the small-thickness portion of the workpiece W1 placed on the struts 3 as viewed from above. Thus, the workpiece W1 and the heat storage member 5 are transported while the large-thickness portion of the member faces the small-thickness portion of the workpiece. The small-thickness portion of the workpiece W1 has a small sheet thickness and can easily experience temperature drop. The large-thickness portion of the heat storage member 5 has a relatively large heat capacity within the heat storage member 5 and provides relatively large amounts of radiant heat. This reduces temperature drop in the small-thickness portion of the workpiece W1 more effectively. This reduces temperature drop in the entire workpiece W1 more efficiently and, at the same time, efficiently reduces the temperature difference between the small- and large-thickness portions of the workpiece W1.

A differential-thickness sheet may be, for example, a tailored blank produced by joining steel sheets with different sheet thicknesses with adjacent ends abutting each other. Alternatively, a differential-thickness sheet may be a patchwork-tailored blank produced by joining overlapping steel sheets with different sizes. Alternatively, a differential-thickness sheet may be a tailor-rolled blank made up of one steel sheet with some portions with sheet thicknesses changed through processing, such as rolling.

(Shields)

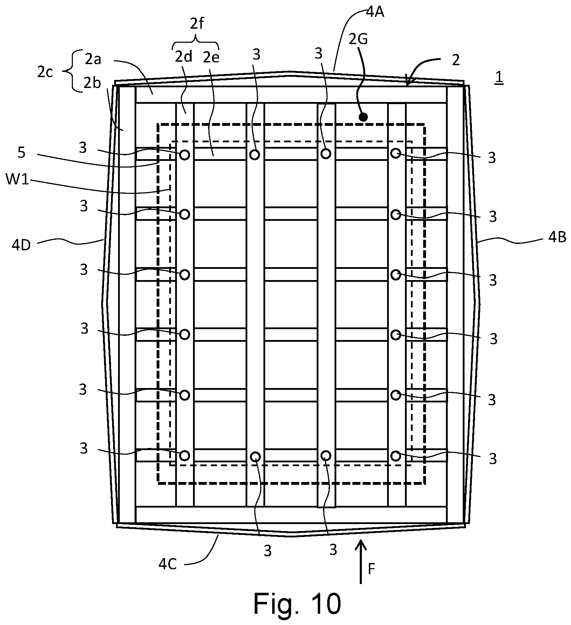

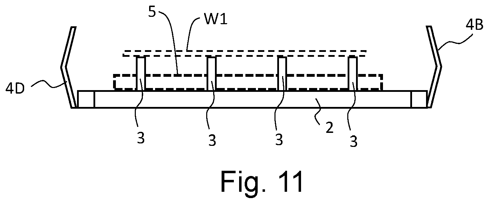

FIG. 10 is a top view of an exemplary arrangement of the tray 1 including shields 4 (4A to 4D). FIG. 11 is a side view of the tray 1 shown in FIG. 10 as viewed in the direction of arrow F. The tray 1 shown in FIGS. 10 and 11 is the same as the tray 1 shown in FIGS. 2 and 3 except that the shields 4 (4A to 4D) have been added. As shown in FIG. 10, the shields 4A to 4D are provided so as to surround the entire periphery of the tray body 2 as viewed from above. The shields 4 include a pair of shields 4A and 4C covering the tray body 2 along the short-length direction (i.e. short sides) and a pair of shields 4B and 4D covering the tray body along the long-length direction (i.e., long sides) as viewed from above.

As shown in FIG. 11, every one of the shields 4A to 4D covers the height region defined by the heights of the upper surface of the heat storage member 5 and the top of the highest-top strut 3 from a side (i.e., in a direction perpendicular to the top-bottom direction). That is, the shields 4A to 4D extend at least from the heat storage member 5 to the highest location on the struts. Thus, the shields 4A to 4D prevent outside air from flowing into the space between the heat storage member 5 placed on the tray body 2 and the workpiece W1 placed on the struts 3.

The shields 4A to 4D are mounted on the tray body 2. In the implementation shown in FIG. 11, the shields 4B and 4D are connected to the sides of the tray body 2 and extend upward. The shields 4 are connected to the tray body 2 by means of fastening members such as welds or bolts, for example. The shields 4 may be detachable from the tray body 2.

In the implementation shown in FIGS. 10 and 11, each of the shields 4A to 4D has an inclined surface inclined so as to be located closer to the struts 3 and thus the workpiece W1 and heat storage member 5 going from the center to the ends. In other words, each of the shields 4A to 4D is curved in shape such that its central portion protrudes outward and its ends are located inward of the central portion. Thus, outside air that has hit the shields 4 is guided away from the workpiece W1 placed on the tray. As shown in FIGS. 10 and 11, the shields 4B and 4D are constructed such that their central portions are located outward of their ends as viewed both from above and from the sides.

It will be understood that the shields are not limited to the above-described shape. For example, the shields 4 may be constituted by flat sheets. The shields may also be shaped such that their central portions are located outward of their ends as viewed either in side view or in plan view.

Also, the positioning of the shields 4 are not limited to the locations shown in FIGS. 10 and 11. In the implementation shown in FIG. 10, shields 4B and 4D covering the workpiece along the long length and shields 4A and 4C covering the workpiece along the short length are provided. In other arrangements, shields 4 may cover the workpiece along at least one of the long length and the short length. Covering the workpiece along the long length with shields 4 prevents air from entering in a wide range. In other arrangements, a shield 4 covers the workpiece at least from the front as determined along the direction of transportation. This prevents outside air from entering during transportation more effectively.

[Exemplary Process for Manufacturing Press-Formed Product]

Returning to FIG. 1, an exemplary process for manufacturing a press-formed product using the above-described hot-press manufacturing line 10 will be described. The process for manufacturing a press-formed product according to an embodiment includes a heating step in which the workpiece W1 is heated, a transportation step in which the workpiece W1 is transported, and a pressing step in which the workpiece W1 is pressed.

(Heating Step)

At the heating step, the heat storage member 5 and workpiece W1 are heated in the heating device 14 while being placed on the tray 1. For example, as shown in FIGS. 2 to 11, the heat storage member 5 is placed on the tray body 2 and the workpiece W1 is placed on the struts 3. The heat storage member 5 and workpiece W1 placed on the tray 1 overlap each other in the top-bottom direction, i.e., direction normal to the sheet surfaces of the workpiece W1.
The tray body 2 includes empty spaces 2G extending therethrough in the top-bottom direction. Thus, even if a heat source is located below the tray 1, heat transfer from the heat source to the heat storage member 5 and workpiece W1 is less likely to be prevented by the tray body 2.
The tray 1 with the heat storage member 5 and workpiece W1 placed thereon enters the heating chamber of the heating device 14 through the inlet 14B. The tray 1 is transported by the in-chamber rollers 13 to the outlet 14A. The heating device 14 heats the heat storage member 5 and workpiece W1 to a predetermined heating temperature while transporting them. This heating temperature is, for example, the Ac3 transformation point, at which the ferrite in the steel constituting the workpiece W1 completes transformation to austenite, or higher.
It will be understood that a transportation device and a manipulator may be provided for placing the workpiece W1 on the tray 1 before the tray enters the heating device 14. The transportation device places the workpiece W1 on the struts 3 of the tray 1. For example, this transportation device may have the same construction as the transportation device 46 for lifting the workpiece W1 on the tray 1 and placing it on the pressing location shown in FIG. 1. This transportation device is located upstream of the heating device 14.

(First Transportation Sub-Step)

At a first transportation sub-step, the heat storage member 5 and workpiece W1 exit the heating device 14 while being placed on the tray 1, and are transported to a location where they are handed to the transportation device 46, i.e., lifting location. Thus, the heat storage member 5 and workpiece W1, together with the tray 1, are transported from the heating device 14 to the lifting location while the heat storage member is placed on the tray body 2 and the workpiece is placed on the struts 3 and overlaps the heat storage member 5, located above it. Outside the heating device 14, the tray 1 is transported by the transportation rollers 26 to near the press machine 20. For example, as illustrated by FIGS. 2 to 11, the heat storage member 5 and workpiece W1 are placed on the tray 1 and transported from the heating device 14 to the lifting location. The positional relationship between the workpiece W1 and heat storage member 5 at the first transportation sub-step is the same as their positional relationship at the heating step. That is, the tray 1 makes it possible to transport the workpiece W1 to the lifting location at the first transportation sub-step while retaining the positional relationship between the workpiece W1 and heat storage member 5 during heating. This reduces temperature drop in the workpiece W1 during transportation. Further, temperature drop in the workpiece W1 during transportation is reduced even without providing a heat source, such as a heater, on the transportation path to generate heat energy. Thus, temperature drop is reduced in a simple manner.

(Second Transportation Sub-Step)

At a second transportation sub-step, near the press machine 20, the workpiece W1 placed on the struts 3 is lifted by the transportation device 46. As discussed above, the transportation device 46 moves the workpiece W1 upward while holding the workpiece with the arms 71. The workpiece W1 moves upward while remaining in the same attitude as when being placed on the struts 3. At this time, the workpiece W1 being lifted upward by the transportation device 46 does not get snagged on the struts 3, since the struts extend upward. This simplifies the control or device configuration for lifting the workpiece W1.
The workpiece W1 lifted by the transportation device 46 is set on the pressing location. The pressing location is between the upper die part 21 and lower die part 23 of the press machine 20, for example.

(Pressing Step)

The press machine 20 press-forms the workpiece W1 using the upper and lower die parts 21 and 23. The workpiece W1 being pressed here is the workpiece W1 that has been heated by the heating device 14 to the Ac3 transformation point or higher and then transported to the pressing location by the transportation table 16 and transportation device 46. The press machine 20 begins press-forming the workpiece W1 to perform forming and quenching at the same time. Specifically, with the workpiece W1 being positioned between the upper and lower die parts 21 and 23, the press machine 20 moves the upper and lower die parts 21 and 23 closer to each other until the die reaches the bottom-dead point to form the workpiece. After the die has reached the bottom-dead point, the upper and lower die parts 21 and 23, while being die-tightened, are in contact with the workpiece W1 to rapidly remove heat from the workpiece W1. This causes martensite transformation or bainite transformation of the workpiece W1. As a result, the workpiece W1 is made into a formed product that has been shaped to conform to the upper and lower die parts 21 and 23 and quenched.

The present invention is not limited to the above-described embodiments. For example, although the above-described embodiments describe implementations with one workpiece placed on the tray 1 while overlapping the heat storage member 5 and located above it, two or more workpieces may be placed on the tray while overlapping, and located above, the heat storage member 5.

[Variations of Tray]

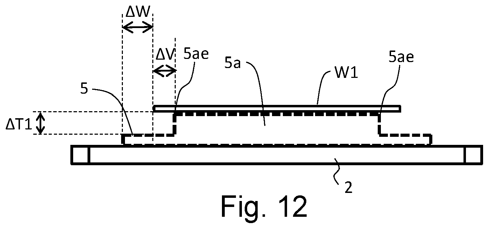

FIGS. 12 to 14 each show a side view of a variation of the tray 1. In each of the implementations shown in FIGS. 12 to 14, the tray 1 includes a tray body 2 and a sheet-shaped heat storage member 5 placed on the tray body 2. In FIGS. 12 to 14, the tray body 2 may have the same construction as in FIGS. 2, 5 or 10. Each of the heat storage members 5 shown in FIGS. 12 to 14 is a variation of the sheet-shaped heat storage member 5.

In the implementation shown in FIG. 12, the heat storage member 5 includes a projection 5a protruding upward. The projection 5a is shaped to be capable of supporting the workpiece W1. The workpiece W1 is placed on the heat storage member 5 while in contact with the projection 5a. The projection 5a has a flat top surface. The workpiece W1 is in contact with the top surface. That is, the top surface of the projection 5a provides a placement surface to be contacted by the workpiece W1. The area of the placement surface as viewed from above is smaller than the area of the entire heat storage member 5 as viewed from above.

As viewed from above, at least some portions of the ends (i.e., edges) 5ae of the placement surface is located inward of the ends (i.e., edges) of the workpiece W1. This creates a space between end portions of the workpiece W1 and the heat storage member 5. The arms 71 of the transportation device 46 can be inserted into this space so that the arms 71 can support the lower surface of the workpiece W1. This facilitates the lifting operation of the transportation device 46 for the workpiece W1. The dimension, in the top-bottom direction, of the space between the workpiece W1, as measured at end portions of the workpiece W1, and the heat storage member 5, $\Delta T1$, is not limited to any particular range, and is preferably in the same range as for $\Delta H$ discussed above, for example.

Further, the distance $\Delta W$ between an edge of the heat storage member 5 placed on the tray body 2 as viewed from above and an edge of the workpiece W1 placed on the projection 5a as viewed from above is not limited to any particular value, and is preferably, again, 10 to 200 mm. The maximum value of the distance $\Delta V$ between an edge of the workpiece W1 placed on the projection 5a as viewed from above and an edge 5ae of the placement surface of the projection 5a as viewed from above is not limited to any particular value, and is preferably not larger than 100 mm, and more preferably not larger than 50 mm.

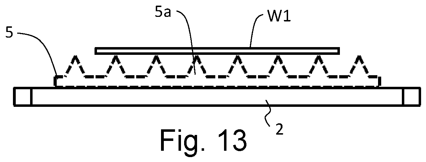

In the implementation shown in FIG. 13, the heat storage member 5 includes a plurality of projections 5a protruding upward. The plurality of projections 5a are arranged in a single direction. Each of the projections 5a forms a ridge extending in a direction crossing the direction in which the projections 5a are arranged (in FIG. 13, direction perpendicular to the sheet surface). Thus, the heat storage member 5 may be constructed such that the workpiece W1 is placed on the ridges formed by the projections 5a.

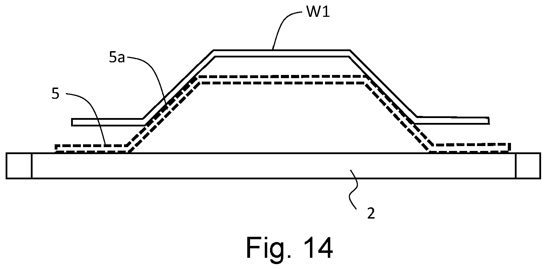

In the implementation shown in FIG. 14, the heat storage member 5 is a sheet curved to protrude upward. Within the heat storage member 5, the protrusion 5a and the portions other than the protrusion 5a have generally the same sheet thickness. Thus, the protrusion 5a may be a portion of a sheet that has been bent to protrude upward. In the implementation shown in FIG. 14, the workpiece W1 is an intermediate formed product obtained by forming a flat sheet. The heat storage member 5 is shaped to conform to the shape of the workpiece W1. The heat storage member 5 may be obtained by forming a flat sheet, for example.

Starting from the arrangements shown in FIG. 12 to 14, the heat storage member 5 may be placed on struts extending upward from the tray body 2. Further, starting from the arrangements shown in FIGS. 12 to 14, the tray body 2 may be omitted, where the heat storage member 5 also functions as the tray body 2.

[Variations of Heat Storage Member]

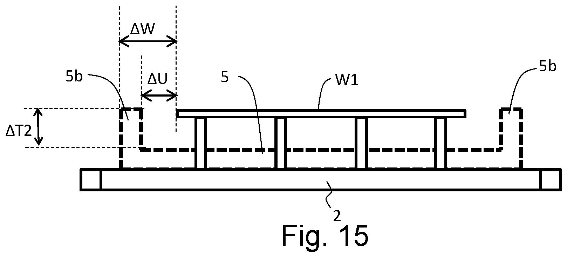

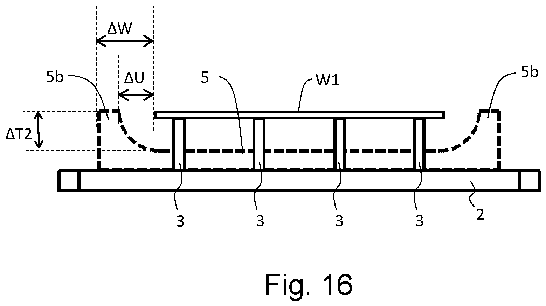

FIGS. 15 and 16 each shows a side view showing a variation of the heat storage member 5. In each of the implementations shown in FIGS. 15 and 16, the tray 1 includes a tray body 2, a sheet-shaped heat storage member 5 placed on the tray body 2, and struts 3 allowing the workpiece W1 to be placed thereon. In FIGS. 15 and 16, the tray body 2 and struts 3 may have the same constructions as in FIG. 2. Each of the heat storage members 5 shown in FIGS. 15 and 16 is a variation of the sheet-shaped heat storage member 5. In the implementations shown in FIGS. 15 and 16, portions of the heat storage member 5 extend upward to form vertical walls 5b located outward of the ends (i.e., edges) of the workpiece W1 as viewed from above. That is, the heat storage member 5 includes vertical walls 5b extending upward located outward of the region occupied by the workpiece

W1. The vertical walls 5b may be present, for example, along at least some of the regions surrounding the region in which the struts 3 are located. The vertical walls 5b shown in FIG. 15 extend generally vertically from the upper surface of the heat storage member 5. The inner surfaces of the vertical walls 5b shown in FIG. 16 are inclined.

The upper edges of the vertical walls 5b may be located as high as, or higher than, the top ends of the struts 3. That is, the height ΔT2 as measured from the upper surface of the heat storage member 5 may be equal to, or larger than, the height of the workpiece W1 placed on the struts 3. For example, the sides of the workpiece W1 may be covered with the vertical walls 5b. This allows the side edges of the workpiece W1 to receive radiant heat from the vertical walls 5b of the heat storage member 5 to obtain supplemental amounts of heat, thereby reducing temperature drop in the edge portions of the workpiece W1 more effectively. Further, it produces the same effects as in implementations with shields 4 provided on the sides, as shown in FIGS. 10 and 11, for example.

A space is provided between the vertical walls 5b and the workpiece W1 placed on the struts 3. The arms 71 of the transportation device 46 can be inserted into this space. This facilitates the lifting operation of the transportation device 46 for the workpiece W1. The smaller the distance between the vertical walls 5b and the workpiece W1 placed on the struts 3, the better to provide the temperature-retaining function for the workpiece W1. The maximum value of the distance ΔU between a vertical walls 5b and an edge of the workpiece W1 as viewed from above is not limited to any particular value, and preferably not larger than 200 mm, and more preferably not larger than 100 mm, for example.

[Material of Workpiece]

The material of a workpiece may be any formable metal. Although not limiting, examples of materials for a workpiece include Fe-based materials such as carbon steel or stainless steel, and Al-based and Ti-based materials. Further, the workpiece may include a plating layer. For example, the workpiece may be a plated steel sheet. The plating layer may be a plating layer of, for example, an aluminum alloy, an aluminum-based alloy, a zinc alloy, or a zinc-based alloy.

A workpiece constituted by a plated steel sheet is preferable in that oxide scale is not easily produced during transportation. If a workpiece W1 overlapping, and located above, the heat storage member 5 is transported and, during this, oxide scale is formed on the lower surface of the workpiece W1, this oxide scale may peel off and drop onto the upper surface of the heat storage member 5. If this is the case, repeatedly and consecutively using the heat storage member 5 and tray 1 may cause oxide scale to be deposited on the heat storage member 5, potentially causing pollution. If the workpiece is a plated steel sheet, oxide scale formed during transportation can be reduced, thereby reducing pollution of the heat storage member 5.

[Effects of Transportation of Workpiece Separated from Heat Storage Member]

In the above-described implementations, a heat storage member 5 and a workpiece W1 on the tray 1, separated in the top-bottom direction and overlapping each other, are transported. This reduces variations in characteristics of a workpiece W1 as represented by the differences between the upper and lower surfaces of the workpiece.

If the heat storage member 5 and workpiece W1 overlapping with no clearance therebetween are transported, the lower surface of the workpiece W1, i.e., surface overlying the heat storage member 5, and the opposite surface, i.e., upper surface, of the workpiece, on the other, are in contact with air for different periods of time. In such cases, if the workpiece W1 is a non-plated steel sheet, the upper and lower surfaces of the workpiece may develop different amounts of oxide scale. If the upper and lower surfaces have different amounts of oxide scale, the upper and lower surfaces may have different frictional characteristics. As a result, adjustments to the die and settings of forming conditions for press-forming may require increased time. Further, if a workpiece W1 that is a plated steel sheet is heated at the heating step while overlapping the heat storage member 5 without a clearance therebetween, the surface of the workpiece W1 that overlies the heat storage member 5 and the opposite surface may experience different rates of temperature increase, potentially causing differences in temperature history. If this is the case, the upper and lower surfaces of the workpiece W1 may experience differences in the alloying of the plating and base material, potentially causing differences in the quality of the plating. In view of this, the workpiece W1 and heat storage member 5 are separated by a distance while being heated and transported to reduce variations in characteristics, such as frictional characteristics and plating quality, of the upper and lower surfaces of the workpiece W1.

[Variations of Hot-Press Manufacturing Line]

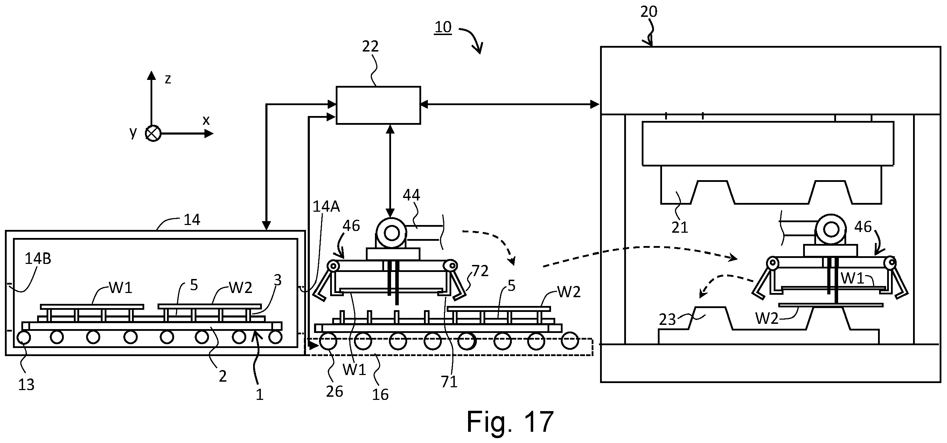

FIG. 17 shows a variation of the hot-press manufacturing line 10. The hot-press manufacturing line 10 shown in FIG. 17 includes a heating device 14, a transportation table 16, a manipulator 44, a transportation device 46, a press machine 20, and a controller 22. The hot-press manufacturing line 10 of FIG. 17 may have the same configuration as in FIG. 1 except for the transportation device 46 and press machine 20.

In the implementation shown in FIG. 17, the press machine 20 allows two workpieces W1 and W2 to be positioned between the upper and lower die parts 21 and 23. The upper and lower die parts 21 and 23 are movable relative to each other. With the two workpieces W1 and W2 being positioned between the upper and lower die parts 21 and 23, the press machine 20 moves the upper and lower die parts 21 and 23 closer to each other to press-form the two workpieces W1 and W2 simultaneously.

(Transportation Device)

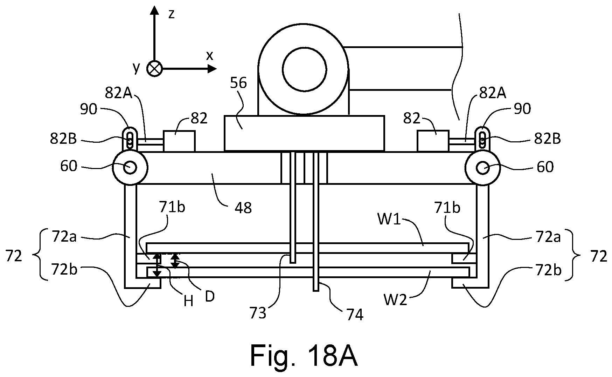

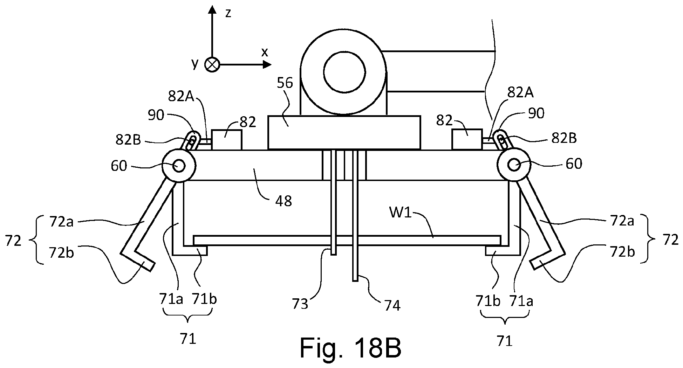

FIG. 18A is a side view of the transportation device 46 of FIG. 17 as viewed from a side (y-direction) illustrating an exemplary construction. FIG. 18B shows the transportation device 46 of FIG. 18A with its second arms 72 opened outwardly.

(Base Frame)

In the implementation shown in FIGS. 18A and 18B, the transportation device 46 includes a base frame 48, as well as a pair of first arms 71 and a pair of second arms 72 rotatably mounted on the base frames 48. The shape of the base frame 48 is rectangular when viewed from above. In the present implementation, the top-bottom direction represents the z-direction. A lateral direction is a direction in a plane perpendicular to the top-bottom direction. Lateral directions include the long-length direction of the base frame 48, i.e., y-direction, and the short-length direction, i.e., x-direction.

A joint 56 is provided on the upper surface of the base frame 48 to be connected to the manipulator 44. The joint 56 is connected to the manipulator such that the base frame 48 is rotatable, about an axis in the top-bottom direction, relative to the manipulator 44.

(First and Second Arms)

The pair of first arms 71 are separated from each other in a lateral direction (x-direction). Each of the first arms 71 includes a first base 71a extending from the base frame 48 in the top-bottom direction, and a first claw 71b extending, with a bend, from the first base 71a in the lateral direction. Each first arm 71 is mounted on the base frame 48 so as to be rotatable about an axis of rotation 60 in the y-direction. One end of the first base 71a is rotatably connected to the base frame 48, while the first claw 71b extends from the other end.

The pair of second arms 72 are separated from each other in a lateral direction (x-direction). Each of the second arms 72 includes a second base 72a extending from the base frame 48 in the top-bottom direction, and a second claw 72b extending, with a bend, from the second base 72a in the lateral direction. Each second arm 72 is mounted on the base frame 48 so as to be rotatable about an axis of rotation 60 in the y-direction. One end of the second base 72a is rotatably connected to the base frame 48, while the second claw 72b extends from the other end.

The location of the pair of first claws 71b in the top-bottom direction and the location of the pair of second claws 72b in the top-bottom direction are different from each other. In the implementation shown in FIGS. 18A and 18B, the first bases 71a are shorter than the second bases 72a as measured in the top-bottom direction. The first claws 71b are located closer to the base frame 48 than the second claws 72b are.

In the implementation shown in FIGS. 18A and 18B, the axis of rotation 60 of each first arm 71 is coaxial with the axis of rotation 60 of the associated second arm 72. This allows the first and second arms 71 and 72 to be efficiently positioned on the base frame 48. Alternatively, the axis of rotation 60 of each first arm 71 and the axis of rotation 60 of the associated second arm 72 may not be coaxial.

(Drive Units)

The pair of second arms 72 are driven by the second drive unit. The second drive unit rotates the pair of second arms 72 relative to the base frame 48 to change the distance between the second claws 72b in a lateral direction (x-direction). In the implementation shown in FIGS. 18A and 18B, the second drive unit is constituted by actuators 82 provided for the respective second arms 72.

An actuator 82 may be an air cylinder, for example. The actuator 82 adjusts the amount of extension of an actuation shaft 82A that moves in the axial direction. A pin 82B is provided on the distal end of the actuation shaft 82A. The pin 82B is inserted into a slot in a link 90 fixed to the associated second arm 72 so as to be movable and rotatable.

When each actuator 82 extends its actuation shaft 82A, the associated second arm 72 extends downwardly, as shown in FIG. 18A, such that the pair of second claws 72b of the pair of second arms 72 are located closer to each other, i.e., in a closed state. When each actuator 82 retracts its actuation shaft 82A, the pair of second claws 72b of the pair of second arms 72 move away from each other, as shown in FIG. 18B, such that they are in an open state.

The pair of first arms 71 are driven by a first drive unit (not shown). The first drive unit rotates the pair of first arms 71 relative to the base frame 48 to change the distance between the first claws 71b in a lateral direction (x-direction). The first drive unit that drives the first arms 71 may be an arrangement including actuators similar to the actuators 82 shown in FIGS. 18A and 18B, for example. The pair of first arms 71 are controlled by the first drive unit to be, again, in a closed state, in which the pair of first claws 71b are located closer to each other, or in an open state, in which the pair of first claws 71b are more distant from each other than in the closed state. It will be understood that the actuators of the first and second drive units are not limited to air cylinders, and may be motors or hydraulic cylinders, for example.

The pair of first claws 71b are capable of supporting the lower surface of the first workpiece W1 at both ends as determined along the lateral direction when they are laterally closer to each other, i.e., in the closed state. The pair of second claws 72b are capable of supporting the lower surface of the second workpiece W2 at both ends as determined along the lateral direction when they are laterally closer to each other, i.e., in the closed state.

[Exemplary Process for Manufacturing Press-Formed Product]

An exemplary process for manufacturing a press-formed product using the hot-press manufacturing line 10 shown in FIG. 17 will be described. The process for manufacturing a press-formed product includes a heating step, a first transportation step, a second transportation step, and a pressing step. The heating step and the first transportation step may be the same as in the manufacturing process of the hot-press manufacturing line 10 shown in FIG. 1.

(Heating Step)

At the heating step, the heat storage member 5 and the first and second workpieces W1 and W2 are heated by the heating device 14 while being placed on the tray body 2. The first and second workpieces W1 and W2 are heated while each overlapping the heat storage member 5 in the direction normal to their sheet surfaces and located above the heat storage member 5. Each of the first and second workpieces W1 and W2 is placed on at least three struts 3. The struts 3 extend upward from the tray body 2.

(First Transportation Step)

At the first transportation step, the heat storage member 5 and the first and second workpieces W1 and W2, while being on the tray body 2, are transported by the transportation table 16 from the heating device 14 to the lifting location for the transportation device 46.

(Second Transportation Step)

The second transportation step includes: a sub-step in which the transportation device 46 lifts the first workpiece W1; a sub-step in which the transportation device 46 lifts the second workpiece W2; a sub-step in which the first and second workpieces W1 and W2 are transported; a sub-step in which the first workpiece W1 is lowered to a pressing location; and a sub-step in which the second workpiece W2 is lowered to a pressing location.

FIG. 17 shows how the transportation device 46 lifts the first workpiece W1. The pair of first arms 71 rotatably mounted on the base frame 48 of the transportation device 46 are driven to support the lower surface, at both ends, of the first workpiece W1 using the claws of the pair of first arms 71 and lift the workpiece. To do this, the pair of first arms 71 and the pair of second arms 72 are brought into the open state and the transportation device 46 is lowered to be closer to the first workpiece W1 on the transportation rollers 26 of the transportation table 16. Rotating the pair of first arms 71 to be in the closed state causes the claws of the pair of first arms 71 (i.e., first claws 71b) to dive to below the lower surface, at both ends, of the first workpiece W1. With this state kept, the transportation device 46 is lifted to support the lower surface, at both ends, of the first workpiece W1 using the first claws 71b of the pair of first arms 71 and lift the workpiece.

To lift the second workpiece W2, the transportation device 46, while holding the first workpiece W1 by supporting its lower surface using the pair of first arms 71, drives the pair of second arms 72 to lift the second workpiece W2. In the same manner as in the lifting operation for the first workpiece W1, the transportation device 46 supports the lower surface, at both ends, of the second workpiece W2 using the claws of the pair of second arms 72 and lifts the workpiece.

The transportation device 46 transports the first workpiece W1 with the lower surface supported by the claws of the pair of first arms 71 and the second workpiece W2 with the lower surface supported by the claws of the pair of second arms 72 while the workpieces overlap each other in the direction normal to the sheet surfaces of the first workpiece W1 and separated from each other.

FIG. 17 shows how the transportation device 46 lowers the second workpiece W2 on its pressing location. The transportation device 46 moves to the pressing location for the second workpiece W2. The transportation device 46, while holding the first workpiece W1 by supporting its lower surface with the pair of first arms 71, drives the pair of second arms 72 to be in the open state and lowers the second workpiece W2 on its pressing location on the press machine 20. Thereafter, the transportation device 46 moves to the pressing location for the first workpiece W1 and drives the pair of first arms 71 to be in the open state, and lowers the first workpiece W1 on its pressing location on the press machine 20.

In the implementation shown in FIG. 17, two workpieces are positioned between the upper and lower die parts 21 and 23 of a single press machine and the two workpieces are press-formed simultaneously. In this implementation, the first and second workpieces W1 and W2 are lowered onto different pressing locations between the upper and lower die parts 21 and 23. The lowering of the two workpieces held by the transportation device 46 onto their respective pressing locations is not limited to this manner. For example, the pressing locations may be provided in two different press machines, where the first and second workpieces W1 and W2 are lowered onto their respective pressing locations.

[Experiment]

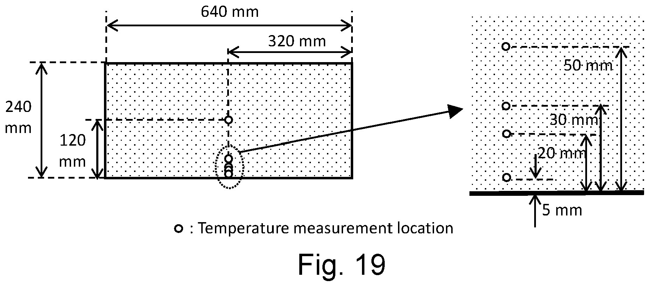

A steel sheet was heated and temperature changes after completion of heating were measured under various conditions. Specifically, the experiment was conducted as follows: The samples used were steel sheets for hot pressing of the order of 1.5 GPa having a sheet thickness of 0.8 mm or 1.6 mm, and temperature was measured by thermocouples attached to a surface of the steel sheet. The steel sheet was heated in a heating furnace to 950 °C, and temperature drop after removal from the heating furnace and during air cooing was measured. For Comparative Example 1, temperature was measured where a single steel sheet with a sheet thickness of 1.6 mm was heated alone and left to cool; for Comparative Example 2, a single steel sheet with a sheet thickness of 0.8 mm was heated alone and left to cool; for the inventive examples, two steel sheets with a sheet thickness of 0.8 mm were positioned to overlap each other in the direction normal to the sheet surfaces and fixedly arranged with a predetermined distance D. Three values of the distance D between the two overlapping steel sheets were used: 10 mm, 30 mm, and 50 mm, which provided Inventive Example 1, Inventive Example 2, and Inventive Example 3, respectively. FIG. 19 indicates locations at which temperature was measured. The temperature of each of the upper and lower steel sheets was measured at positions of 5 mm, 20 mm, 30 mm, and 50 mm away from an edge of the steel sheet, and at the center of the steel sheet.

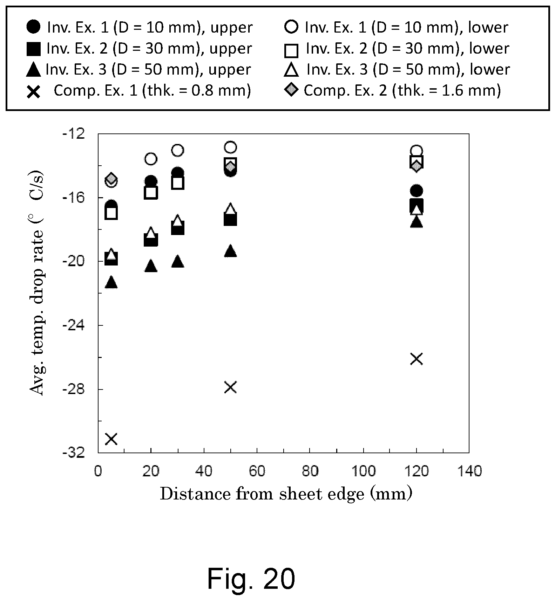

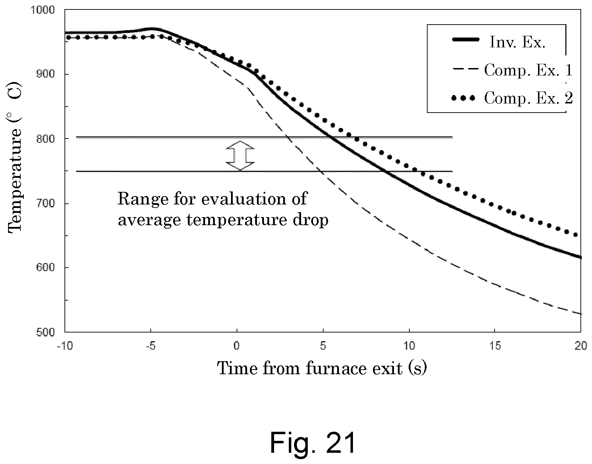

FIG. 20 is a graph of measurements of average temperature drop rate. The average temperature drop rate was derived across the section for 800 °C to 750 °C along the temperature drop curve from measurements. FIG. 21 is a graph indicating the range from which the average temperature drop rates were derived. The results shown in FIG. 20 demonstrate that, for all the measurement locations, the average temperature drop rates for Inventive Examples 1 to 3, which had two steel sheets overlapping in the top-bottom direction with a sheet thickness of 0.8 mm, were lower than that for Comparative Example 1, which had a single steel sheet with a sheet thickness of 0.8 mm. The results also demonstrate that, with two overlapping steel sheets, examples with lower values of the distance D between the two steel sheets achieved lower average temperature drop rates near the edges of the steel sheets and achieved greater improvements in average temperature drop rate for all the measurement locations. Experiment 3, which had a distance D of 50 mm, improved the temperature drop rate to an extent approximately in the middle between that for Comparative Example 1, which had a single steel sheet with a sheet thickness of 0.8 mm, and that for Comparative Example 2, which had a single steel sheet with a sheet thickness of 1.6 mm. Inventive Example 1, which had a distance D of 10 mm, improved the temperature drop rate to an extent substantially equal to that of Comparative Example 2, which had a single steel sheet with a sheet thickness of 1.6 mm. Setting an appropriate distance D between the two overlapping steel sheets achieved temperature-drop characteristics substantially equal to those of a steel sheet with a sheet thickness that was twice as large, i.e., with a heat capacity that was twice as high.

These results show that, when a workpiece is transported, positioning a sheet that has been heated in the same way as the workpiece to overlap the workpiece in the top-bottom direction reduces temperature drop rate. The above-described embodiments enable retaining the distance between the sheet-shaped heat storage member and workpiece placed on the tray 1 in a stable manner using a simple arrangement during the heating step and the subsequent transportation step. This will reduce temperature drop in the workpiece and, at the same time, enable simple and efficient transportation.

REFERENCE SIGNS LIST

1: tray
2: tray body
3: struts
3a: first group of struts
3b: second group of struts
W1: workpiece
5: heat storage member

**Claims**

1. A method of manufacturing a press-formed product comprising:

    a heating step in which a sheet-shaped heat storage member and a sheet-shaped workpiece placed above the heat storage member are heated by a heating device while overlapping in a direction normal to a sheet surface of the workpiece;
    a first transportation step in which the heat storage member and the workpiece placed above the heat storage member are transported from the heating device to a lifting location while overlapping in the direction normal to the sheet surface of the workpiece;
    a second transportation step in which the workpiece placed above the heat storage member, when at the lifting location, is lifted upward by a transportation device and transported to a pressing location on a press machine; and
    a pressing step in which the workpiece is processed by the press machine.

**2.** The method of manufacturing a press-formed product according to claim 1, wherein:

at the heating step, the heat storage member and the workpiece are heated while the heat storage member is placed on a tray body and the workpiece is placed on a first group of at least three struts extending upward from the tray body or the heat storage member to a location higher than an upper surface of the heat storage member; and,

at the first transportation step, the heat storage member placed on the tray body and the workpiece placed on the first group of at least three struts are transported, together with the tray body, from the heating device to the lifting location.

**3.** The method of manufacturing a press-formed product according to claim 1, wherein:

the heat storage member includes a projection protruding upward;

at the heating step, the workpiece is heated while placed on the projection of the heat storage member; and

at the first transportation step, the workpiece is transported from the heating device to the lifting location while placed on the projection of the heat storage member.

**4.** The method of manufacturing a press-formed product according to claim 2, wherein, at the heating step and the first transportation step, the heat storage member is placed on a second group of at least three struts extending upward from the tray body, and positioned to overlap the tray body in a top-bottom direction and be separated from the tray body by a distance.

**5.** The method of manufacturing a press-formed product according to claim 2 or 4, wherein the tray body is shaped to expand perpendicularly to a top-bottom direction and includes an empty space extending through the tray body in the top-bottom direction.

**6.** The method of manufacturing a press-formed product according to any one of claims 1 to 5, wherein, at the heating step and the first transportation step, an outer edge of the heat storage member is located outward of an outer edge of the workpiece as viewed from above.

**7.** The method of manufacturing a press-formed product according to any one of claims 1 to 6, wherein:

the workpiece is a differential-thickness sheet including a large-thickness portion and a small-thickness portion; and,

at the heating step and the first transportation step, at least part of the small-thickness portion of the workpiece overlaps the heat storage member as viewed from above.

**8.** The method of manufacturing a press-formed product according to any one of claims 1 to 7, wherein:

the workpiece is a differential-thickness sheet including a large-thickness portion and a small-thickness portion;

the heat storage member is a differential-thickness sheet including a large-thickness portion and a small-thickness portion; and,

at the heating step and the first transportation step, at least part of the small-thickness portion of the workpiece overlaps the large-thickness portion of the heat storage member as viewed from above.

**9.** The method of manufacturing a press-formed product according to any one of claims 1 to 8, wherein, at the first transportation step, the heat storage member and the workpiece are transported while being covered with a shield from a front as determined along a direction of transportation.

**10.** The method of manufacturing a press-formed product according to any one of claims 1 to 9, wherein a relationship between a minimum sheet thickness t1 (mm) of a thinnest portion of the workpiece, on one hand, and a minimum sheet thickness t2 (mm) of a thinnest portion of the heat storage member, on the other, is represented by the following expression:

$$0.8 \leq t2/t1 \leq 20.$$

**11.** The method of manufacturing a press-formed product according to any one of claims 1 to 10, wherein, at the heating step and the first transportation step, a relationship between a maximum distance D (mm) between the heat storage member and the workpiece as measured in a top-bottom direction, on one hand, and a minimum sheet thickness t1 (mm) of a thinnest portion of the workpiece, on the other, is represented by the following expression:

$$D \leq 120t1.$$

**12.** The method of manufacturing a press-formed product according to any one of claims 1 to 11, wherein, at the heating step and the first transportation step, a distance between an edge of the heat storage member as viewed from above and an edge of the workpiece as viewed from above, ΔW, is 10 to 200 mm.

13. The method of manufacturing a press-formed product according to any one of claims 1 to 12, wherein, at the heating step and the first transportation step, part of the heat storage member extends upward outside an outer edge of the workpiece as viewed from above.

14. A tray comprising:

a tray body;
a sheet-shaped heat storage member placed on the tray body; and
a first group of at least three struts extending upward from the tray body or the heat storage member to a location higher than an upper surface of the heat storage member,
wherein the first group of struts are disposed such that imaginary straight lines connecting the struts form at least one triangle when viewed from above.

15. A tray comprising:

a tray body; and
a sheet-shaped heat storage member placed on the tray body,
wherein the heat storage member includes a projection protruding upward to allow a sheet-shaped workpiece to be placed thereon.

16. The tray according to claim 14, further comprising:

a second group of at least three struts extending upward from the tray body and positioned at different locations from those of the struts of the first group as viewed from above,
wherein the heat storage member is placed on the second group of struts to overlap the tray body in a top-bottom direction and be separated therefrom by a distance.

17. The tray according to any one of claims 14 to 16, wherein the tray body is shaped to expand perpendicularly to a top-bottom direction and includes an empty space extending through the tray body in the top-bottom direction.

18. The tray according any one of claims 14, 16 and 17, wherein the first group of struts is positioned inward of an outer edge of the heat storage member placed on the tray body as viewed from above.

19. The tray according to any one of claims 14 and 16 to 18, further comprising:
a shield adapted to cover, along a direction perpendicular to the top-bottom direction, a height range between an upper surface of the heat storage member and an upper end of one strut of the first group whose top is located highest.

20. A hot-press manufacturing line comprising:

the tray according to any one of claims 14 to 19;
a heating device adapted to heat a workpiece placed on the tray;
a transportation path provided between the heating device and a lifting location for the workpiece to transport the tray from the heating device to the lifting location;
a transportation device adapted to support, and lift upward, the workpiece placed on the tray when at the lifting location;
at least one press machine including at least one pair of die parts; and
a moving device adapted to move the transportation device between the lifting location and a pressing location located between the at least one pair of die parts.

Fig. 1

Fig. 2

Fig. 3

W1

5

3

3

3

2

3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18A

Fig. 18B

○ : Temperature measurement location

Fig. 19

| | |
|---|---|
| ● Inv. Ex. 1 (D = 10 mm), upper | ○ Inv. Ex. 1 (D = 10 mm), lower |
| ■ Inv. Ex. 2 (D = 30 mm), upper | □ Inv. Ex. 2 (D = 30 mm), lower |
| ▲ Inv. Ex. 3 (D = 50 mm), upper | △ Inv. Ex. 3 (D = 50 mm), lower |
| ✕ Comp. Ex. 1 (thk. = 0.8 mm) | ◆ Comp. Ex. 2 (thk. = 1.6 mm) |

Fig. 20

Fig. 21

| INTERNATIONAL SEARCH REPORT | International application No. |
| --- | --- |
| | **PCT/JP2021/030814** |

**A. CLASSIFICATION OF SUBJECT MATTER**

*B21D 43/00*(2006.01)i; *B21D 22/20*(2006.01)i; *B30B 13/00*(2006.01)i
FI:  B21D43/00 E; B21D22/20 E; B21D43/00 K; B30B13/00 D

According to International Patent Classification (IPC) or to both national classification and IPC

**B. FIELDS SEARCHED**

Minimum documentation searched (classification system followed by classification symbols)

B21D43/00; B21D22/20; B30B13/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2016-524043 A (THYSSENKRUPP STEEL EUROPE AG) 12 August 2016 (2016-08-12) paragraphs [0017], [0022]-[0024], fig. 1-3 | 1, 6-7, 10, 12 |
| A | paragraphs [0017], [0022]-[0024], fig. 1-3 | 2-5, 8, 11, 13-20 |
| Y | JP 2014-525838 A (WOBBEN PROPERTIES GMBH ) 02 October 2014 (2014-10-02) paragraph [0021] | 1, 6-7, 10, 12 |
| A | paragraph [0021] | 2-5, 8, 11, 13-20 |
| Y | WO 2017/200006 A1 (NIPPON STEEL & SUMITOMO METAL CORP.) 23 November 2017 (2017-11-23) paragraphs [0050], [0051] | 7, 10 |
| A | paragraphs [0050], [0051] | 1-6, 8-9, 11-20 |
| A | US 2017/0043387 A1 (HUANG, Po Ming) 16 February 2017 (2017-02-16) paragraphs [0047]-[0049], fig. 1 | 1-20 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 October 2021** | **26 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2021/030814**

| Patent document cited in search report | | | Publication date (day/month/year) | Patent family member(s) | | | Publication date (day/month/year) |
|---|---|---|---|---|---|---|---|
| JP | 2016-524043 | A | 12 August 2016 | US | 2016/0108489 | A1 | |
| | | | | paragraphs [0017], [0025]-[0027], fig. 1-3 | | | |
| | | | | EP | 3004403 | A1 | |
| | | | | CN | 105264097 | A | |
| | | | | KR | 10-2016-0013979 | A | |
| | | | | MX | 2015015939 | A | |
| | | | | BR | 112015029444 | A2 | |
| | | | | ES | 2716381 | T3 | |
| JP | 2014-525838 | A | 02 October 2014 | US | 2015/0290752 | A1 | |
| | | | | paragraph [0021] | | | |
| | | | | EP | 2576096 | A2 | |
| | | | | TW | 201313358 | A | |
| | | | | CN | 103732334 | A | |
| | | | | KR | 10-2014-0043503 | A | |
| | | | | MX | 2014001189 | A | |
| | | | | RU | 2014108319 | A | |
| | | | | ES | 2554238 | T3 | |
| | | | | BR | 112014002765 | A2 | |
| WO | 2017/200006 | A1 | 23 November 2017 | US | 2019/0091748 | A1 | |
| | | | | paragraphs [0072], [0073] | | | |
| | | | | EP | 3459649 | A1 | |
| | | | | CN | 109153060 | A | |
| | | | | KR | 10-2018-0137032 | A | |
| | | | | MX | 2018014105 | A | |
| | | | | BR | 112018073277 | A2 | |
| | | | | RU | 2708283 | C1 | |
| US | 2017/0043387 | A1 | 16 February 2017 | (Family: none) | | | |

Form PCT/ISA/210 (patent family annex) (January 2015)

**EP 4 205 876 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5910305 B
- JP 5910306 B
- JP 5814669 B
- JP 4673656 B